# EUROPEAN PATENT APPLICATION

(11) **EP 4 235 911 A1**
(43) Date of publication of application: **30.08.2023**
(21) Application number: 21896767.7
(22) Date of filing: 08.11.2021
(51) Int. Cl.: H01M 10/54, C22B 7/00

(54) **IMPURITY REMOVAL AND TREATMENT METHOD IN RECOVERY PROCESS OF SCRAPPED POSITIVE ELECTRODE MATERIAL OF LITHIUM BATTERY**

(30) Priority: 26.11.2020 CN 202011347197
(71) Applicant: Sichuan Energy Internet Research Institute Tsinghhua University, Chengdu, Sichuan 610213 (CN)
(72) Inventor: JUNG, Joey Chung-Yen, Chengdu, Sichuan 610213 (CN); ZHANG, Jiujun, Chengdu, Sichuan 610213 (CN); DAI, Linshan, Chengdu, Sichuan 610213 (CN); SUI, Pang-Chieh, Chengdu, Sichuan 610213 (CN); SHI, Yifang, Chengdu, Sichuan 610213 (CN)
(74) Representative: Wang, Bo
(86) International application number: PCT/CN2021/129320
(87) International publication number: WO 2022/111266

(57) **Abstract**

The present disclosure discloses a method for impurity removal and treatment in the recycling process of scrap positive electrode materials of lithium batteries. The method includes controlling a flow rate of a leachate of scrap positive electrode materials of lithium batteries and a first alkaline solution at a first temperature higher than the room temperature and a constant first pH value to remove, by precipitation, iron ions, aluminum ions and at least part of copper ions to obtain a first filtrate; controlling the flow rate of the first filtrate, a complexing agent and a second alkaline solution at a second temperature higher than the room temperature and within a constant first pH range to obtain a target substance precipitate by separating a second filtrate containing lithium ions from the first filtrate; dissolving the target substance precipitate to obtain a first solution; and controlling the flow rate of the first solution and a fluorine-containing precipitant at a third temperature high than the room temperature and a constant concentration of fluorinion to remove, by precipitation, calcium ions, magnesium ions and at least part of lead ions to obtain a target solution. By the method of the present disclosure, a precipitate with a large particle size, high crystallinity and low water content can be obtained, which facilitates washing and improves the recycling rate of nickel-cobalt-manganese from the scrap positive electrode materials of lithium batteries.

## Description

### CROSS REFERENCE TO RELATED APPLICATIONS

The present application claims the priority of Chinese Patent Application No. 202011347197.8, filed on November 26, 2020, the entire contents of which are incorporated herein by reference.

### TECHNICAL FIELD

The present disclosure relates to the technical field of recycling materials, and in particular to a method for impurity removal and treatment in the recycling process of scrap positive electrode materials of lithium batteries.

### BACKGROUND

In the recycling process of scrap positive electrode materials of lithium batteries, a dissolved nickel-cobalt-manganese solution often contains a variety of metal impurities (for example, Fe, Al, Cu, Ca, Mg or Pb, etc.), and if the impurities are not removed, the above impurities will affect the quality and performance of the positive electrode materials of lithium batteries synthesized after the scrap positive electrode materials of lithium batteries are recycled.

In the prior art, the method for removing metal impurities such as Fe, Al, Ca, Mg, etc. has the problem that it is difficult to filter out and wash a precipitate, resulting in the problem that an impurity precipitate that cannot be filtered out remains in an actual filtrate, and the impurity precipitate will be mixed into the subsequent steps, ultimately resulting in a high impurity content in a ternary precursor product. At the same time, as it is difficult to filter out and wash the precipitate, the filtration process has a higher requirement for filtration equipment, needing more water for cleaning and more time for filtration, and even some of the colloidal filter residues are high in liquid content and tend to block a filter material, making washing unable to be performed, causing the operation of filtration and washing more difficult, reducing the recycling rate of nickel, cobalt and manganese metal and increasing the recycling cost.

In addition, the co-precipitation process of the precursor (or called the ternary precursor) of the ternary positive electrode material is an important step for preparing the positive electrode materials of lithium batteries. The performance of the precursor product directly affects the performance of the positive electrode material. The equipment used for co-precipitation of the precursor is of high value and manufactured precisely. Improving the production efficiency of the precursor is particularly critical to the cost impact of the overall recycling process. In the usual co-precipitation process of the ternary precursor, an on-line pH meter is used to precisely control the pH value in the recycling process to ensure the quality of the precursor. The present disclosure aims to address the problem that the on-line pH meter is prone to lithium ion poisoning in a solution with a high concentration of lithium ions, which affects the stability of the co-precipitation process. At the same time, sodium hydroxide is used as a precipitant, greatly improving the production efficiency, reducing the amount of water used in the recycling process and decreasing the size of the equipment. Based on the above two reasons, according to the present disclosure, lithium ions are removed before the co-precipitation process of the ternary precursor, and hydroxides of nickel, cobalt, manganese and other metals easy to wash precipitate by controlling the reaction conditions, without significantly affecting the production efficiency in the recycling process.

Therefore, it is necessary to provide a method for impurity removal and treatment in the recycling process of scrap positive electrode materials of lithium batteries.

### SUMMARY

Some embodiments of the present disclosure provide a method for impurity removal and treatment in the recycling process of scrap positive electrode materials of lithium batteries, the method including: controlling the flow rate of a leachate of scrap positive electrode materials of lithium batteries and a first alkaline solution at a first temperature higher than the room temperature and a constant first pH to remove, by precipitation, iron ions, aluminum ions and at least part of copper ions to obtain a first filtrate; controlling the flow rate of the first filtrate, a complexing agent and a second alkaline solution at a second temperature higher than the room temperature and within a constant first pH range to remove lithium ions and obtain a target substance precipitate by separating a second filtrate containing the lithium ions from the first filtrate; dissolving the target substance precipitate to obtain a first solution; and controlling the flow rate of the first solution and a fluorine-containing precipitant at a third temperature high than the room temperature and a constant concentration of fluorinion to remove, by precipitation, calcium ions, magnesium ions and at least part of lead ions to obtain a target solution. The method for impurity removal and treatment is carried out in an overflow reactor capable of being operated continuously.

Some embodiments of the present disclosure provide a method for impurity removal and treatment in the recycling process of scrap positive electrode materials of lithium batteries, the method including adding an appropriate amount of a first base solution in a first reactor, and maintaining the reaction temperature in the first reactor at the first temperature higher than the room temperature; respectively pumping the leachate of scrap positive electrode materials of lithium batteries and the first alkaline solution at a suitable flow rate into the first reactor to react for first time period and then overflow from the first reactor; during the first time period, the reaction being maintained to be carried out at the first temperature and the reaction being maintained to be carried out at the first pH value by adjusting the flow rate of the first alkaline solution; and then carrying out a first separation process and obtaining a first impurity and the first filtrate.

In some embodiments, before carrying out the first separation process, the method further includes: aging a mixture overflowing from the first reactor for a second time period by maintaining the aging temperature at the first temperature.

In some embodiments, the method further includes: adding an appropriate amount of a second base solution in a second reactor, and maintaining the reaction temperature in the second reactor at the second temperature higher than the room temperature, and then introducing protective gas into the second reactor; respectively pumping the first filtrate, the complexing agent and the second alkaline solution at a suitable flow rate into the second reactor to react for a third time period and then overflow from the second reactor; during the third time period, the reaction being maintained to be carried out at the second temperature and the reaction being maintained to be carried out within the first pH range by adjusting the flow rate of the second alkaline solution; and then carrying out a second separation process and obtaining the target substance precipitate and the second filtrate; the second filtrate including lithium ions.

In some embodiments, before carrying out the second separation process, the method further includes: aging a mixture overflowing from the second reactor for a fourth time period by maintaining the aging temperature at the second temperature.

In some embodiments, the method further includes: dissolving the target substance precipitate to obtain a first solution; maintaining the reaction temperature in the third reactor at a third temperature higher than the room temperature; respectively pumping the first solution and the fluorine-containing precipitant at a suitable flow rate into the third reactor to react for a fifth time period and then overflow from the third reactor; during the fifth time period, the reaction being maintained to be carried out at the third temperature and the concentration of fluorinion of reactants in the third reactor being maintained within a first concentration range by adjusting the flow rate of the fluorine-containing precipitant; and then carrying out a third separation process and obtaining a second impurity and the target solution.

In some embodiments, before carrying out the third separation process, the method further includes: aging a mixture overflowing from the third reactor for a sixth time period by maintaining the aging temperature at the third temperature; and standing the aged mixture for a seventh time period.

In some embodiments, the method for impurity removal may continuously treat the leachate of scrap positive electrode materials of lithium batteries.

In some embodiments, before carrying out precipitation treatment on the leachate of scrap positive electrode materials of lithium batteries, the method further includes: adding a leaching agent to the scrap positive electrode materials of lithium batteries for dissolution until the pH is within a second range, then carrying out a fourth separation process, and obtaining a third impurity and the leachate of scrap positive electrode materials of lithium batteries; the leaching agent including at least a reducing agent, a first acid and water.

In some embodiments, the scrap positive electrode materials of lithium batteries include one or more of a lithium-nickel-cobalt-manganese oxide battery material, a lithium-cobalt oxide battery material, a lithium-cobalt-manganese oxide battery material, a lithium-cobalt alumina battery material, and a lithium-manganese oxide battery material.

In some embodiments, the method further includes adding a third alkaline solution to the target solution to obtain a precursor precipitate.

In some embodiments, the first base solution is deionized water or a solution at the first pH value.

In some embodiments, the first temperature is within a range of 50 °C-90 °C.

In some embodiments, the first alkaline solution includes lithium hydroxide.

In some embodiments, the first pH value is within a range of 5.5-6.7.

In some embodiments, the first time period is within a range of 2 h-10 h.

In some embodiments, the first impurity includes one or more of iron hydroxide, aluminum hydroxide and copper hydroxide.

In some embodiments, the second time period is within a range of 0.5 h-2 h.

In some embodiments, the second base solution includes ammonium hydroxide.

In some embodiments, the second temperature is within a range of 40 °C-70 °C.

In some embodiments, the protective gas includes nitrogen or inert gas.

In some embodiments, the complexing agent includes ammonium hydroxide.

In some embodiments, the second alkaline solution includes lithium hydroxide.

In some embodiments, the first pH range is 10.5-11.8.

In some embodiments, the third time period is within a range of 2 h-10 h.

In some embodiments, the fourth time period is within a range of 0.5 h-2 h.

In some embodiments, the dissolving the target substance precipitate to obtain a first solution, includes: adding a leaching agent to the target substance precipitate for dissolution until the pH is within a third range to obtain a target substance-containing solution; and adding an appropriate amount of a fourth alkaline solution to the target substance-containing solution until the pH is within a fourth range to obtain the first solution.

In some embodiments, the third range is 0-4.

In some embodiments, the fourth range is 4.5-6.5.

In some embodiments, the third temperature is within a range of 50 °C-90 °C.

In some embodiments, the fluorine-containing precipitant includes a sodium fluoride solution.

In some embodiments, the first concentration range is 0.005 mol/L-0.1 mol/L.

In some embodiments, the fifth time period is within a range of 2 h-10 h.

In some embodiments, the second impurity includes one or more of calcium fluoride, magnesium fluoride and lead fluoride.

In some embodiments, the sixth time period is within a range of 0.5 h-2 h.

In some embodiments, the seventh time period is within a range of 0.5 h-2 h.

Some embodiment of the present disclosure provide a method for treating the leachate of scrap positive electrode materials of lithium batteries, the leachate of scrap positive electrode materials of lithium batteries including at least calcium ions, magnesium ions or lead ions; before removing the calcium ions, magnesium ions or lead ions, the method includes: adding an appropriate amount of a second base solution in a second reactor, and maintaining the reaction temperature in the second reactor at the second temperature higher than the room temperature, and then introducing protective gas into the second reactor; respectively pumping the first filtrate, the complexing agent and the second alkaline solution at a suitable flow rate into the second reactor to react for a third time period and then overflow from the second reactor; during the third time period, the reaction being maintained to be carried out at the second temperature and the reaction being maintained to be carried out within the first pH range by adjusting the flow rate of the second alkaline solution; and then carrying out a second separation process and obtaining the target substance precipitate and the second filtrate; the second filtrate including lithium ions.

Before carrying out impurity removal on the scrap positive electrode materials of lithium batteries, it is needed to dissolve solid scrap positive electrode materials of lithium batteries to obtain the leachate of scrap positive electrode materials of lithium batteries. Specifically, a leaching agent may be added to the scrap positive electrode materials of lithium batteries for dissolution until the pH is within a second range, then a fourth separation process is carried out, and a third impurity and the leachate of scrap positive electrode materials of lithium batteries are obtained. In some embodiments, the scrap positive electrode materials of lithium batteries may include a lithium-nickel-cobalt-manganese oxide battery material. In some embodiments, the scrap positive electrode materials of lithium batteries may include one or more of a lithium-cobalt oxide battery material, a lithium-cobalt-manganese oxide battery material, a lithium-cobalt alumina battery material, and a lithium-manganese oxide battery material. In some embodiments, the leaching agent may include at least a reducing agent, a first acid and water. In some embodiments, the reducing agent may include a hydrogen peroxide solution. In some embodiments, the reducing agent may also include sulfur dioxide gas, hydrazine hydrate (N₂H₄·H₂O) etc. In some embodiments, the first acid may include sulfuric acid, hydrochloric acid, nitric acid, permanganic acid, sulfurous acid, hypochlorous acid, etc.

In some embodiments, the leaching agent may be used for dissolving the above scrap positive electrode materials of lithium batteries under certain conditions. In some embodiments, the certain conditions may include an initial dissolution temperature, a solution pressure and a dissolution pH. In some embodiments, the initial dissolution temperature of the scrap positive electrode materials of lithium batteries may be within a range of 0 °C-80 °C. Preferably, the initial dissolution temperature of the scrap positive electrode materials of lithium batteries may be within a range of 20 °C-76 °C. Preferably, the initial dissolution temperature of the scrap positive electrode materials of lithium batteries may be within a range of 30 °C-73 °C. Preferably, the initial dissolution temperature of the scrap positive electrode materials of lithium batteries may be within a range of 40 °C-70 °C. Preferably, the initial dissolution temperature of the scrap positive electrode materials of lithium batteries may be within a range of 45 °C-67 °C. Preferably, the initial dissolution temperature of the scrap positive electrode materials of lithium batteries may be within a range of 50 °C-65 °C. Preferably, the initial dissolution temperature of the scrap positive electrode materials of lithium batteries may be within a range of 55 °C-63 °C. Preferably, the initial dissolution temperature of the scrap positive electrode materials of lithium batteries may be within a range of 57 °C-60 °C. In some embodiments, the dissolution pressure of the scrap positive electrode materials of lithium batteries may be normal pressure, i.e., 101.325 kPa. In some embodiments, the dissolution pressure of the scrap positive electrode materials of lithium batteries may also be other pressure values, which is not limited in the present disclosure. In some embodiments, the dissolution pH of the scrap positive electrode materials of lithium batteries may be within the second range. Since the scrap positive electrode materials of lithium batteries contain a variety of metal elements, in order to sufficiently dissolve the scrap positive electrode materials of lithium batteries, the dissolution pH of the scrap positive electrode materials of lithium batteries is slightly within an acidic pH range. For example, the second range may be within a range of 0-2.5. Preferably, the second range may be within a range of 0.2-2.3. Preferably, the second range may be within a range of 0.4-2.2. Preferably, the second range may be within a range of 0.5-2.0. Preferably, the second range may be within a range of 0.6-1.8. Preferably, the second range may be within a range of 0.7-1.6. Preferably, the second range may be within a range of 0.8-1.4. Preferably, the second range may be within a range of 0.9-1.2. More preferably, the dissolution pH may be 1.0. In some embodiments, the certain conditions may further include the particle size of the scrap positive electrode materials of lithium batteries. For example, before dissolving the scrap positive electrode materials of lithium batteries, the scrap positive electrode materials of lithium batteries may be crushed so that the scrap positive electrode materials of lithium batteries are dissolved when the particle size is less than a certain value. In some embodiments, the particle size of the crushed scrap positive electrode materials of lithium batteries may be within a range of 0.01 mm-2 mm. Preferably, the particle size of the crushed scrap positive electrode materials of lithium batteries may be within a range of 0.02 mm-1.5 mm. Preferably, the particle size of the crushed scrap positive electrode materials of lithium batteries may be within a range of 0.04 mm-1.2 mm. Preferably, the particle size of the crushed scrap positive electrode materials of lithium batteries may be within a range of 0.05 mm-0.8 mm. Preferably, the particle size of the crushed scrap positive electrode materials of lithium batteries may be within a range of 0.06 mm-0.4 mm. Preferably, the particle size of the crushed scrap positive electrode materials of lithium batteries may be within a range of 0.08 mm-0.2 mm. More preferably, the particle size of the crushed scrap positive electrode materials of lithium batteries may be 0.1 mm. In the dissolution process of the scrap positive electrode materials of lithium batteries, the contact surface area between the crushed scrap positive electrode materials of lithium batteries and the leaching agent is great, and thus the dissolution rate of the scrap positive electrode materials of lithium batteries is high.

The obtained leachate of scrap positive electrode materials of lithium batteries may be further subjected to impurity removal and treatment. The impurity removal and treatment of the leachate of scrap positive electrode materials of lithium batteries may include three processes as follows: (1) carrying out precipitation on the leachate of scrap positive electrode materials of lithium batteries to remove iron ions, aluminum ions and at least part of copper ions to obtain the first filtrate; (2) carrying out precipitation on the first filtrate to remove lithium ions to obtain the second filtrate containing the lithium ions and the target substance precipitate, respectively; and (3) dissolving the target substance precipitate to obtain the first solution, and carrying out precipitation on the first solution to remove calcium ions, magnesium ions and at least part of lead ions to obtain the target solution. Further, the third alkaline solution may further be added to the target solution to obtain the precursor precipitate of positive electrode materials of lithium batteries.

The above three impurity removal and treatment processes are carried out under stable reaction conditions, e.g. a constant reaction temperature within the allowable range of the measurement error (the allowable range of the measurement error of the reaction temperature is ±2.5 °C), a constant pH value (the allowable range of the measurement error of pH is ±0.05), a constant pH range (the allowable range of the measurement error of the pH range is ±0.05) or a constant concentration range of fluorinion (the allowable range of the measurement error of the concentration range of fluorinion is ±0.0005 mol/L), and two or more reaction materials are continuously pumped into the reactor at the same time. It is to be noted that, the flow rate at which the materials are pumped in is relatively small in relation to the volume of the reactor and, together with the control of a pH meter, a fluorinion meter and thermostat equipment, the reaction may be considered to take place under relatively stable conditions, which is different from the usual chemical reaction process where the pH value changes gradually with the addition of a precipitant until the reaction cut-off pH value is reached. The two or more reaction materials continuously react in the reactor and after a period of reaction time (e.g., the first time period, the third time period or the fifth time period), the materials continuously overflow from the reactor, and subsequent reactions continue in the overflow reactor filled with the reaction materials with a more stable reaction environment, and a continuous uninterrupted operation of the production process can be achieved. As all the three reaction processes are carried out under stable reaction conditions, it is possible to obtain a precipitate with a high crystallinity and large particle size, which facilitates filtration and washing. The above impurity removal and treatment process also includes the process of removing the lithium ions, the lithium ions are removed before preparing the precursor precipitate of positive electrode materials of lithium batteries, so that the purpose of recycling lithium can be achieved, while avoiding affecting the control of the reaction parameters in the subsequent impurity removal process, so that the subsequent reaction can be carried out under relatively stable reaction conditions.

### BRIEF DESCRIPTION OF THE DRAWINGS

The present disclosure will be further illustrated by means of exemplary embodiments, wherein:
FIG. 1 is a schematic flowchart of a method for impurity removal in the recycling process of scrap positive electrode materials of lithium batteries according to some embodiments of the present disclosure;
FIG. 2 is a schematic flowchart of a method for recycling lithium ions in the recycling process of scrap positive electrode materials of lithium batteries according to some embodiments of the present disclosure;
FIG. 3 is a schematic flowchart of a method for impurity removal in the recycling process of scrap positive electrode materials of lithium batteries according to some embodiments of the present disclosure;
FIG. 4A is an SEM image of a filter residue according to Embodiment 1 of the present disclosure;
FIG. 4B is an SEM image of a filter residue according to Embodiment 2 of the present disclosure;
FIG. 5 is an XRD pattern of a filter residue according to Embodiments 3 and 4 of the present disclosure;
FIG. 6 is an SEM image of a filter residue according to Embodiment 3 of the present disclosure;
FIG. 7A is an SEM image of a filter residue according to Embodiment 5 of the present disclosure;
FIG. 7B is an SEM image of a filter residue according to Embodiment 6 of the present disclosure; and
FIG. 8 is a schematic diagram of a method for impurity removal and treatment according to some embodiments of the present disclosure.

### DETAILED DESCRIPTION

To describe the technical solutions in the embodiments of the present disclosure more clearly, the following briefly introduces the accompanying drawings required for describing the embodiments. Apparently, the accompanying drawings in the following description show merely some examples or embodiments of the present disclosure, and a person of ordinary skill in the art may apply the present disclosure, based on the accompanying drawings, to other similar scenarios without creative efforts. Unless obvious from the linguistic context or otherwise indicated, the same reference numerals in the drawings represent the same structure or operation.

It is to be understood that the terms "system", "device", "unit" and/or "module" are used herein as a method to distinguish different assemblies, elements, components, parts or assemblies at different levels. As used herein, the expressions "method for impurity removal", "method for treatment", "method for impurity removal and treatment", "method for recycling lithium ions" or "method for impurity removal and treatment in the recycling process of scrap positive electrode materials of lithium batteries" refers to one or more steps or processes in the recycling process of scrap positive electrode materials of lithium batteries. However, if other words may achieve the same purpose, the words may be replaced by other expressions.

As indicated in the present disclosure and the claims, unless clearly indicated in the context, the words "one", "a", "an" and/or "the" are not specific to the singular but may also include the plural. In general, the terms "include" and "contain" only suggest the inclusion of clearly identified steps and elements, however, the steps and elements do not constitute an exclusive list, and a method or apparatus may also contain other steps or elements. The range of values used in the present disclosure is intended to be a concise representation of each value included in the range.

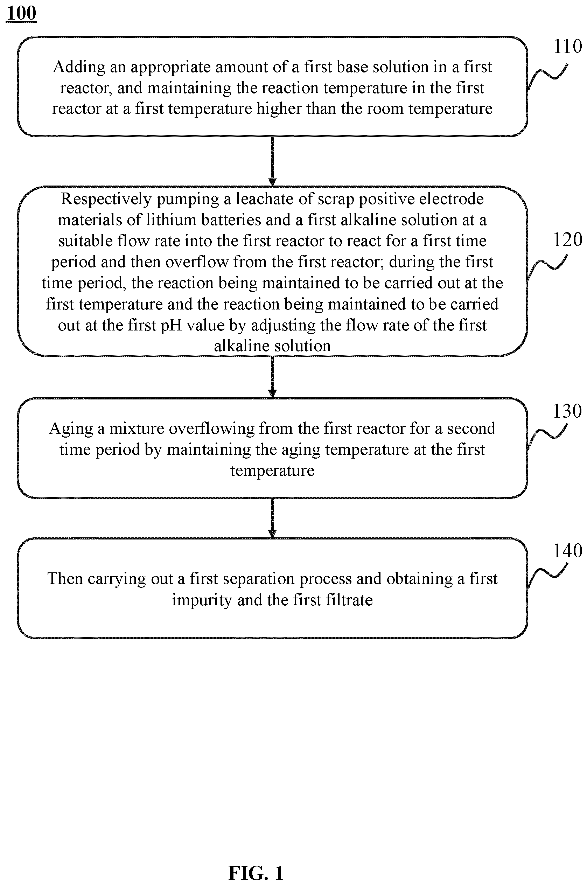

The impurity removal process of a leachate of scrap positive electrode materials of lithium batteries is illustrated below in detail in combination with FIG. 1-FIG. 3.

FIG. 1 is a schematic flowchart of a method 100 for impurity removal in the recycling process of scrap positive electrode materials of lithium batteries according to some embodiments of the present disclosure.

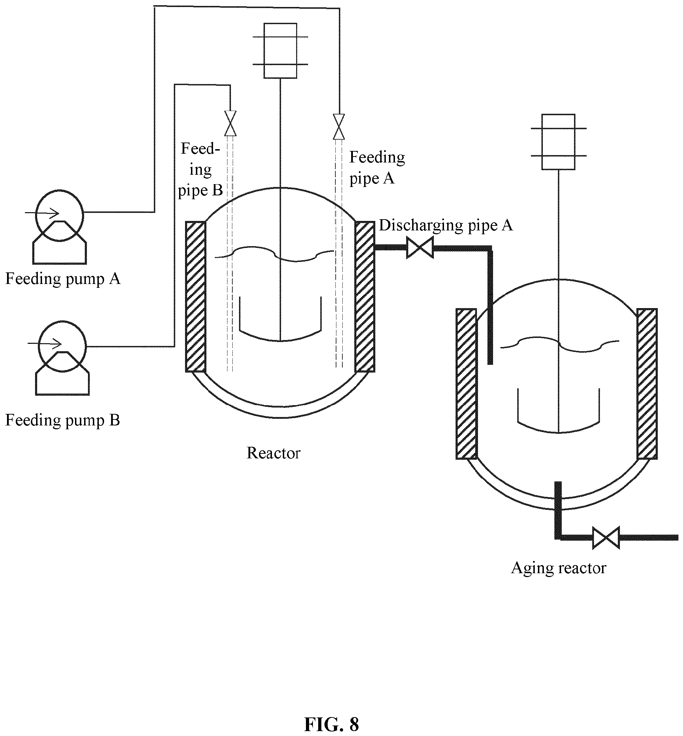

The process of impurity removal in the recycling process of scrap positive electrode materials of lithium batteries may be carried out in reactors and aging reactors. FIG. 8 is a schematic diagram of a method for impurity removal and treatment according to some embodiments of the present disclosure, as shown in FIG. 8, a leachate of scrap positive electrode materials of lithium batteries and a first alkaline solution may be pumped into a reactor through a feeding pump A and a feeding pump B, respectively, and overflow into an aging reactor through a discharging pipe A on the reactor to be aged after reacting for a period of time, wherein the reactor may be a first reactor and the aging reactor may be a first aging reactor.

Step 110: adding an appropriate amount of a first base solution in a first reactor, and maintaining the reaction temperature in the first reactor at a first temperature higher than the room temperature.

The volume of the first reactor may be set according to the process production requirements or the charging rate of reaction materials. For example, the volume of the first reactor may be 50 L, 80 L or 100 L. The first base solution is the liquid which is placed in the first reactor before the reaction material is pumped in. The first base solution is used for soaking a pH meter so that electrodes of the pH meter are located below the liquid level. In some embodiments, the first base solution may be deionized water or a solution at a first pH value. For example, the solution of the first pH value may be a nickel-cobalt-manganese solution. For another example, the solution of the first pH value may be an acidic solution (e.g., a sulphuric acid solution). More about the first pH value may refer to the description of step 120 and not be repeated here.

The first temperature may be higher than the room temperature. In some embodiments, the first temperature may be within a range of 50 °C-90 °C. Preferably, the first temperature may be within a range of 52 °C-88 °C. Preferably, the first temperature may be within a range of 55 °C-86 °C. Preferably, the first temperature may be within a range of 58 °C-83 °C. Preferably, the first temperature may be within a range of 60 °C-80 °C. Preferably, the first temperature may be within a range of 62 °C-78 °C. Preferably, the first temperature may be within a range of 65 °C-76 °C. Preferably, the first temperature may be within a range of 67 °C-73 °C. Preferably, the first temperature may be within a range of 69 °C-71 °C. Preferably, the first temperature may be 50 °C. Preferably, the first temperature may be 55 °C. Preferably, the first temperature may be 60 °C. Preferably, the first temperature may be 65 °C. Preferably, the first temperature may be 70 °C. Preferably, the first temperature may be 75 °C. Preferably, the first temperature may be 80 °C. Preferably, the first temperature may be 85 °C. More preferably, the first temperature may be 90 °C. In some embodiments, the first reactor may be heated to maintain the reaction temperature in the first reactor at the first temperature. The method for heating the first reactor may include electrical heating, steam heating, heat transfer oil circulation heating or far infrared heating, which is not limited in the present disclosure.

Since the first temperature is higher than the room temperature, it is easier to obtain large-grained crystals by crystallization.

Step 120: respectively pumping the leachate of scrap positive electrode materials of lithium batteries and the first alkaline solution at a suitable flow rate into the first reactor to react for first time period and then overflow from the first reactor; during the first time period, the reaction being maintained to be carried out at the first temperature and the reaction being maintained to be carried out at the first pH value by adjusting the flow rate of the first alkaline solution.

The leachate of scrap positive electrode materials of lithium batteries may be obtained by dissolving the scrap positive electrode materials of lithium batteries, and more about obtaining the leachate of scrap positive electrode materials of lithium batteries may refer to the foregoing description and not be repeated here. In some embodiments, the leachate of scrap positive electrode materials of lithium batteries may be a solution containing lithium ions, nickel ions, cobalt ions, manganese ions, etc. The flow rate of the leachate of scrap positive electrode materials of lithium batteries and the first alkaline solution may be set according to the process production requirement and may be set at a suitable value so that the leachate of scrap positive electrode materials of lithium batteries and the first alkaline solution react for the first time period and then overflow from the first reactor. For example, depending on the scale of production, the volume of the first reactor may be 50 L, the flow rate of the leachate of scrap positive electrode materials of lithium batteries may be within a range of 50 mL/min-250 mL/min, and the flow rate of the first alkaline solution may be controlled by maintaining the reaction to be carried out at a first pH value. When pumping the leachate of scrap positive electrode materials of lithium batteries into the first reactor, a feeding pipe of the leachate of scrap positive electrode materials of lithium batteries may be extended into the bottom of the first reactor. When pumping the first alkaline solution into the first reactor, a feeding pipe of the first alkaline solution may be extended into the bottom of the first reactor. As shown in FIG. 8, the leachate of scrap positive electrode materials of lithium batteries and the first alkali solution may be pumped into the reactor (i.e., the first reactor) via the feeding pump A and the feeding pump B, respectively, with a feeding pipe A and a feeding pipe B inserted into the bottom of the reactor. In some embodiments, the first reactor may include a stirring assembly for stirring the leachate of scrap positive materials of lithium batteries and the first alkaline solution in the first reactor.

In some embodiments, first alkali solution may include lithium hydroxide. The concentration of lithium hydroxide may be within a range of 1 mol/L-4 mol/L. Preferably, the concentration of lithium hydroxide is 2 mol/L. Preferably, the concentration of lithium hydroxide is 3 mol/L. In some embodiments, the first pH value is within a range of 5.5-6.7. Preferably, the first pH value is within a range of 5.7-6.5. Preferably, the first pH value is within a range of 5.9-6.3. Preferably, the first pH value is within a range of 6.0-6.2. Preferably, the first pH value may be 5.5. Preferably, the first pH value may be 5.8. Preferably, the first pH value may be 6.0. Preferably, the first pH value may be 6.3. Preferably, the first pH value may be 6.5. Preferably, the first pH value may be 6.7. In some embodiments, the pH of the solution maintaining at the first pH value may refer to that the pH of the solution is always equal to the first pH value or the difference from the first pH value is less than a preset value (e.g., 0.05, 0.10, or 0.15). For example, if the preset value is 0.10 and the first pH value is 6.3, the pH value of the solution may be considered to maintain at the first pH value when the pH value of the solution is 6.2, 6.25, 6.3, 6.35, 6.4 or within the range of 6.2-6.4. When pumping the first alkaline solution into the first reactor, the pumping rate of the first alkaline solution may be controlled by measuring the pH value of the solution in real time with a pH meter so that the pH of the solution is maintained at the first pH value or within the measurement error range (for example, the allowable range of the measurement error of pH is ±0.05, i.e., the first pH value may be within a range of 5.45-6.75) or the difference from the first pH value is within a preset range. For example, if the first pH value needs to be 6.3, when the flow rate of the first alkaline solution is 20 mL/min, the pH of the solution drops, the flow rate of the first alkaline solution needs to be increased appropriately to rise the pH of the solution to 6.3; conversely, when the flow rate of the first alkaline solution is 30 mL/min, the pH of the solution rises, the flow rate of the first alkaline solution needs to be reduced appropriately to drop the pH of the solution down to 6.3. It is to be noted that, the pumping rate of the first alkaline solution is controlled by measuring the pH value of the solution in real time with a pH meter, and the pH meter and the feeding pump of the first alkaline solution may be automatically linked for control.

In some embodiments, the first time period may be within a range of 2 h-10 h. Preferably, the first time period may be within a range of 2.5 h-8.0 h. Preferably, the first time period may be within a range of 3.0 h-7.0 h. Preferably, the first time period may be within a range of 3.5 h-7.5 h. Preferably, the first time period may be within a range of 4.0 h-7.0 h. Preferably, the first time period may be within a range of 4.5 h-6.5 h. Preferably, the first time period may be within a range of 5.0 h-6.0 h. Preferably, the first time period may be within a range of 5.3 h-5.7 h. Preferably, the first time period may be 3 h. Preferably, the first time period may be 4 h. Preferably, the first time period may be 5 h. Preferably, the first time period may be 6 h. Preferably, the first time period may be 7 h. More preferably, the first time period may be 8 h. By setting the volume of the first reactor and the location of an overflow port (e.g., the overflow port is disposed in the upper middle of the first reactor), the reaction material may fully react in the first reactor for 2 h-10 h and then overflow from the first reactor to the first aging reactor.

By maintaining the reaction temperature at the first temperature and maintaining the pH of the solution at the first pH value, the reaction conditions in the reaction process may be more stable and the generated precipitate is uniform in grain size and crystal shape. At the same time, by making the reaction material stay in the first reactor for 2 h-10 h, the reaction material may fully react and precipitate, so that the crystals obtained from the precipitation have a larger grain size, which facilitates the subsequent filtration and washing of the precipitate. In addition, by continuously pumping the reaction material into the first reactor for a continuous reaction, continuous treatment of the leachate of scrap positive materials of lithium batteries can be achieved, which then facilitates achieving industrial large-scale impurity removal.

Step 130: aging a mixture overflowing from the first reactor for a second time period by maintaining the aging temperature at the first temperature.

The aging process may be carried out in the first aging reactor. In some embodiments, the first aging reactor may be heated to maintain the aging temperature in the first aging reactor at the first temperature. The method for heating the first aging reactor may include electrical heating, steam heating, heat transfer oil circulation heating or far infrared heating, which is not limited in the present disclosure. More about the first temperature may refer to the description of step 110 and not be repeated here. In some embodiments, the second time period may be within a range of 0.5 h-2 h. Preferably, the second time period may be within a range of 0.8 h-1.8 h. Preferably, the second time period may be within a range of 1.0 h-1.6 h. Preferably, the second time period may be within a range of 1.2 h-1.4 h. Preferably, the second time period may be 0.5 h. Preferably, the second time period may be 1 h. Preferably, the second time period may be 1.5 h. More preferably, the second time period may be 2 h.

By aging the fully reacted mixture for the second time period, the crystalline grains of the crystals precipitated in the reacted mixture may grow and increase and the particle size distribution thereof is made more uniform.

Step 140: then carrying out a first separation process and obtaining a first impurity and the first filtrate.

The aged mixture may be cooled to the room temperature before carrying out the first separation process. The cooling process may be carried out in a first buffer tank, and the aged mixture may be pumped into the first buffer tank for cooling. The aged mixture may be cooled by natural cooling, air cooling or liquid cooling (e.g., cooling by a liquid cooling medium such as water, ethanol, ethylene glycol, isopropanol, n-hexane, etc.).

In some embodiments, the first separation process may be carried out on the cooled mixture to obtain the first impurity and the first filtrate. Specifically, the first separation process may be a solid-liquid separation process. For example, the first separation method may include filtration, gravity settling, centrifugal settling, pressure filtration, etc. As different scrap positive electrode materials of lithium batteries contain different impurity metal elements, the conditions of the impurity removal reaction are different and the first impurity and/or the first filtrate obtained may be different. In some embodiments, the first impurity may include at least iron hydroxide. In some embodiments, the first impurity may further include iron hydroxide and aluminum hydroxide. In some embodiments, the first impurity may further include copper hydroxide. In some embodiments, the first filtrate may include at least lithium ions and cobalt ions. For example, when positive electrode materials of lithium batteries generated from the scrap positive electrode materials of lithium batteries (e.g., the lithium-nickel-cobalt-manganese oxide battery material) do not contain an aluminum element, the leachate of scrap positive electrode materials of lithium batteries may contain lithium ions, nickel ions, aluminum ions, iron ions, manganese ions, cobalt ions, etc. The first pH value may be 5.5 for removing impurity metal element ions such as aluminum ions and iron ions. At this time the first impurity may include aluminum hydroxide, iron hydroxide, etc., and the first filtrate may contain lithium ions, nickel ions, manganese ions, cobalt ions, etc.

The above method controls the flow rate, pH value, reaction temperature, reaction time and aging time of the leachate of scrap positive electrode materials of lithium batteries and the first alkali solution pumped into the first reactor to make crystalline grains of the crystals grow sufficiently to become large crystalline grains, and in addition, due to the reaction at the constant pH value, a co-precipitate of iron, aluminum, copper, nickel and other metals may be obtained, which facilitates carrying out the first separation process and reduces the amount of water used for washing and shortens the washing time, and also reduces the waste of nickel-cobalt-manganese ions in the washing process, thereby improving the recycling rate of nickel-cobalt-manganese.

A method for removing iron ions and aluminum ions in the recycling process of scrap positive electrode materials of lithium batteries is described in detail below by means of Embodiment 1 and Embodiment 2. It is to be noted that the reaction conditions, reaction materials and the usage amount of the reaction materials in Embodiments 1 and 2 are only intended to illustrate the method for removing iron ions and aluminum ions in the recycling process of scrap positive electrode materials of lithium batteries, and do not limit the scope of protection of the present disclosure. Embodiment 1 is an embodiment of a method for impurity removal for batch-treating the leachate of scrap positive electrode materials of lithium batteries, and Embodiment 2 is an embodiment using the method for impurity removal in FIG. 1. Embodiment 1 is a control group for Embodiment 2.

### Embodiment 1

Step 1: 30 L of a leachate of scrap positive electrode materials of lithium batteries was added to a first reactor of 50 L at the room temperature.

Step 2: a peristaltic pump was controlled online with a pH meter to pump a lithium hydroxide solution of 2 mol/L into the first reactor, the lithium hydroxide solution was stopped pumping until the pH value is maintained at 5.5 and a mixture was enabled to react for 1 h. A total of 4.2 L of lithium hydroxide solution was consumed for the reaction.

Step 3: a reacted mixture was filtered with a filter press having a 200-mesh filter cloth and filter cake was blow-washed with 0.6 MPa of high-pressure air until no filtrate flows out. In the filtration process, if the pressure inside the filter press rises quickly, for example, rises to the upper pressure limit of 0.5 MPa within 2 min, the filtration needs to be stopped, indicating poor filterability of the precipitate. The filtration operation continued when the pressure dropped to 0 MPa.

Step 4: a filtered filtrate was observed and the filtrate was muddy, indicating that the precipitate is not completely filtered.

Step 5: the filtered filter cake was collected to obtain 267 g of wet filter cake, and after drying, 92.4 g of dry filter cake was obtained.

Step 6: the ICP testing was carried out on the leachate of scrap positive electrode materials of lithium batteries, the dry filter cake and the filtrate and the SEM testing was carried out on the dry filter cake.

### Embodiment 2

Step 1: 10 L of the filtrate in Embodiment 1 was added to a first reactor of 50 L as a first base solution to keep electrodes of a pH meter located below the liquid level, and the first reactor was heated to keep the reaction temperature constant at 70°C.

Step 2: a peristaltic pump was used to respectively pump a leachate of scrap positive electrode materials of lithium batteries and a lithium hydroxide solution of 2 mol/L into the first reactor. The pumping rate of the leachate of scrap positive electrode materials of lithium batteries was controlled at 200 mL/min, the pumping rate of lithium hydroxide was controlled by an on-line pH meter, and the pumping rate of lithium hydroxide was controlled to make the pH of a mixture be 5.5. After 3 h of full reaction, the mixture overflowed from an overflow port of the first reactor to enter a first aging reactor. In the process, a total of 36 L of the leachate of scrap positive electrode materials of lithium batteries and 5.04 L of the lithium hydroxide solution were pumped in for reaction.

Step 3: the first aging reactor was heated to keep the aging temperature constant at 70 °C and the mixture was aged in the first aging reactor for 1 h.

Step 4: the aged mixture was cooled in a first buffer tank to the room temperature and then filtered with a filter press, and filter cake was cleaned with 0.6 MPa high-pressure air until no filtrate flowed out. The pressure of the filter press was maintained at less than 0.2 MPa in the filtration process, indicating good filterability of the precipitate.

Step 5: a filtered filtrate was observed and the filtrate was clear, indicating that the precipitate is completely filtered. 51.04 L of the filtrate was obtained.

Step 6: the filtered filter cake was collected to obtain 194.4 g of wet filter cake, and after drying, 112 g of dry filter cake was obtained.

Step 7: the ICP testing was carried out on the leachate and the dry filter cake and SEM testing was carried out on the dry filter cake.

Calculation of the water content of the filter cake in Embodiment 1 and Embodiment 2 is as follows.

Water content of the filter cake in Embodiment 1 W1=(267g - 92.4g)/267g=65.4%;

Water content of the filter cake in Embodiment 2 W2=(194.4g - 112g)/194.4g=42.4%.

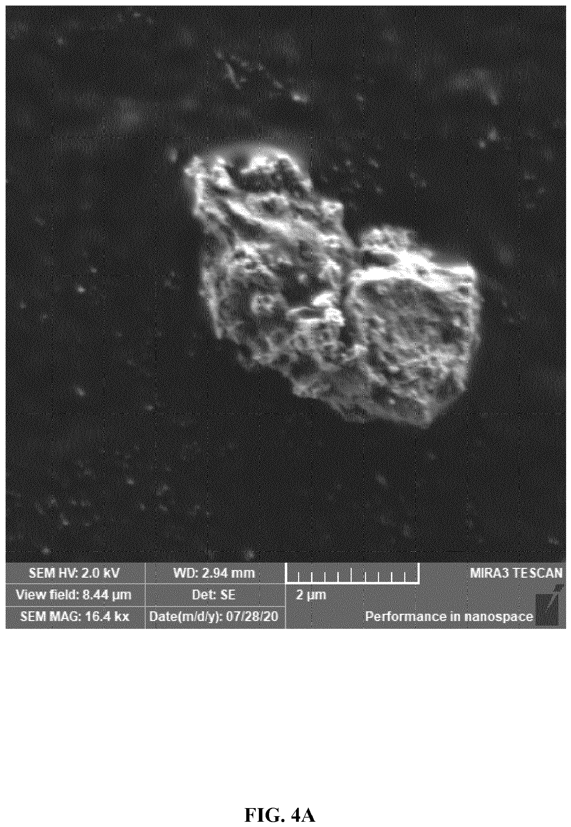

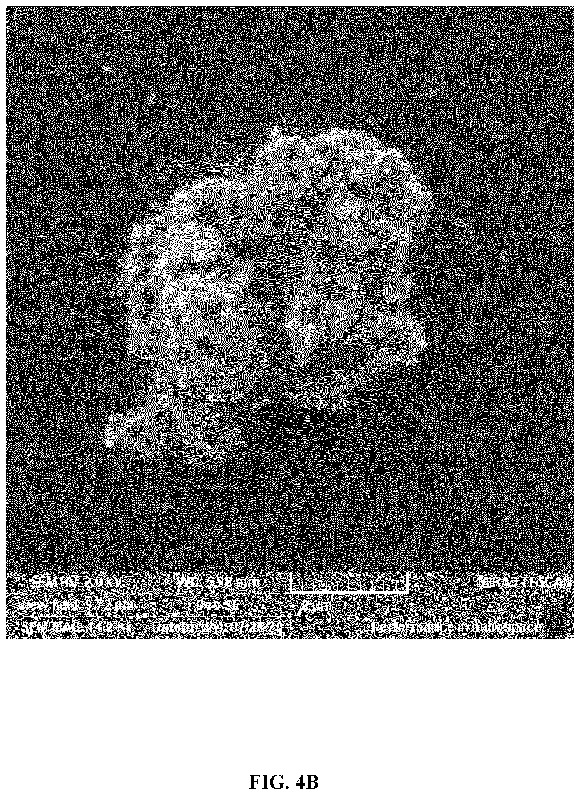

From the calculation results of the water content of Embodiments 1 and 2, it may be seen that the water content of the filter cake in Embodiment 2 was lower compared to that in Embodiment 1, indicating that the solid-liquid separation was more complete in the filtration process in Embodiment 2. The contrast between FIG. 4A and FIG. 4B showed that the crystalline grains of the precipitate in Embodiment 2 were larger than those in Embodiment 1, and some of nickel ions co-precipitated with aluminum ions and iron ions at a constant pH=5.5, improving the structure of an aluminum hydroxide precipitate so that the aluminum hydroxide precipitate was no longer colloidal and therefore easier to filter.

Based on the ICP test results of Embodiment 1 and Embodiment 2, the data in the following table may be obtained.

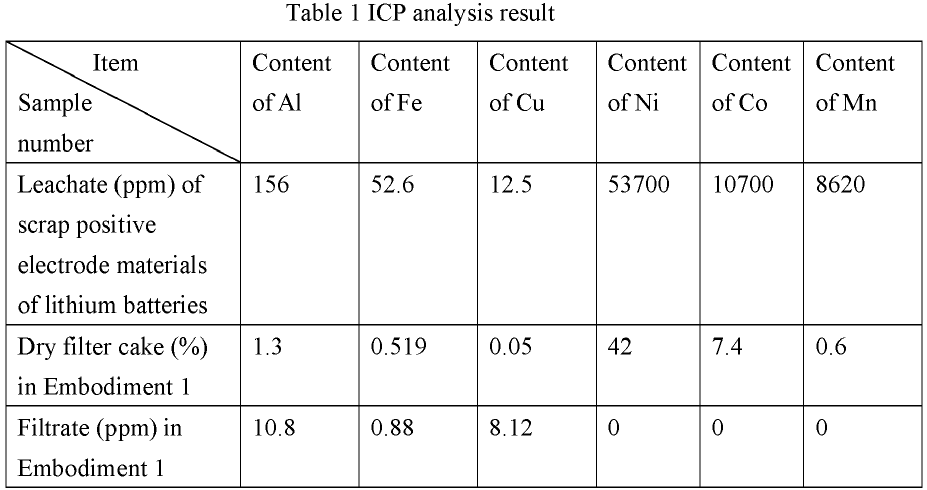

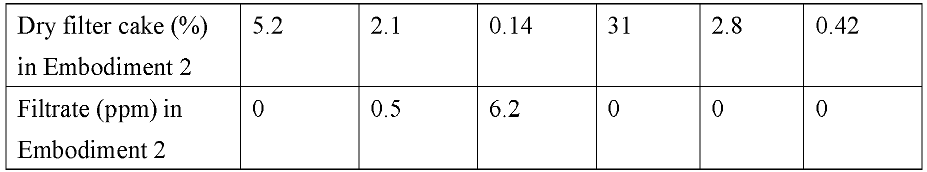

The removal rates of metal ions in Embodiment 1 and Embodiment 2 may be further calculated based on Table 1: the removal rate of M in Embodiment 1=(M content in the leachate × the total volume of a leachate involved in the reaction - M content in the filtrate × the total volume of the filtrate)/(M content in the leachate × the total volume of a leachate involved in the reaction) × 100%, and M refers to aluminum ions, iron ions or copper ions. The removal rate of aluminum ions was calculated: Al removal rate=(156 × 30 L - 10.8 × 34.2 L)/(156 × 30 L) × 100%=92.1%; the removal rate of iron ions was calculated: Fe removal rate=(52.6 × 30 L - 0.88 × 34.2 L)/(52.6 × 30 L) × 100%=98.1%; and the removal rate of copper ions: Cu removal rate=(12.5 × 30 L - 8.12 × 34.2 L)/(12.5 × 30 L) × 100%=26%.

The loss rate of M in Embodiment 1 =(the weight of the dry filter cake × M content in the dry filter cake)/(M content in the leachate × the total volume of a leachate involved in the reaction) × 100%, and M refers to nickel ions, cobalt ions, or manganese ions. The loss rate of nickel ions was calculated: Ni loss rate=(92.4 g × 0.42)/(53700 × 30 L/1000) × 100%=2.4%; the loss rate of cobalt ions was calculated: Co loss rate=(92.4 g × 0.074)/(10700 × 30 L/1000) × 100%=2.13%; and the loss rate of manganese ions was calculated: Mn loss rate=(92.4 g × 0.006)/(8620 × 30 L/1000) × 100%=0.21%.

The removal rate of M in Embodiment 2 =(M content in the leachate × the total volume of a leachate involved in the reaction - M content in the filtrate × the total volume of the filtrate)/(M content in the leachate × the total volume of a leachate involved in the reaction), and M refers to aluminum ions, iron ions, or copper ions. The removal rate of aluminum ions was calculated: Al removal rate=(156×36 L-0)/(156×36 L)=100%; the removal rate of iron ions was calculated: Fe removal rate=(52.6×36L-0.5×51.04L)/(52.6×36L)=98.65%; and the removal rate of copper ions was calculated: Cu removal rate=(12.5×36L-6.2×51.04 L)/(12.5×36L)=29.7%.

The loss rate of M in Embodiment 2 =(the weight of the dry filter cake × M content in the dry filter cake)/(M content in a leachate × the total volume of a leachate involved in the reaction) × 100%, and M refers to nickel ions, cobalt ions, or manganese ions. The loss rate of nickel ions was calculated: Ni loss rate=(112 g × 0.31)/(53700 × 36 L/1000) × 100% =1.8%; the loss rate of cobalt ions was calculated: Co loss rate=(112 g × 0.028)/(10700 × 36 L/1000) × 100%=0.8%; and the loss rate of manganese ions was calculated: Mn loss rate=(112 g × 0.0042)/(8620 × 36 L/1000) × 100%=0.15%.

From the calculation results of the removal rate of aluminum ions, iron ions and copper ions in Embodiments 1 and 2, it may be seen that the removal rates of aluminum ions, iron ions and copper ions in Embodiment 2 were higher than that in Embodiment 1, indicating that Embodiment 2 was more effective in removing aluminum ions, iron ions and copper ions from the leachate of the scrap positive electrode materials of lithium batteries. Moreover, as it was almost impossible to wash the filter residue of Embodiment 1, while the filter residue of Embodiment 2 was enriched to a certain extent in the filter press, the filter residue may be washed with a small amount of clean water at one time to recycle some of the aluminum ions, iron ions and copper ions, further reducing the loss rate of aluminum ions, iron ions and copper ions.

FIG. 4A is an SEM image of the filter residue according to Embodiment 1 of the present disclosure, and FIG. 4B is an SEM image of the filter residue according to Embodiment 2 of the present disclosure. From FIG. 4A and FIG. 4B, it may be seen that the filter residue in Embodiment 1 has fine crystalline grains and is hardened into blocks, with a compact cluster structure and a high degree of compactness; in Embodiment 2, the filter residue has slightly larger crystalline grains and is hardened into blocks after drying, while with a loose structure and a low degree of compactness. It shows that the precipitate obtained after the method of Embodiment 2 is used for carrying out impurity removal on the leachate of scrap positive electrode materials of lithium batteries has larger crystalline grains and a lower water content.

Based on the comparison results of Embodiment 1 and Embodiment 2, in Embodiment 1, the reaction material is added at one time and reacts for 1 h at the room temperature and at a solution pH of 5.5 to carry out impurity removal treatment on the leachate of scrap positive electrode materials of lithium batteries. In Embodiment 2, by maintaining the reaction temperature at 70°C and the solution pH at 5.5, continuous feeding is carried out to make the reaction material fully react for 3 h and age for 1 h so as to carry out impurity removal on the leachate of scrap positive electrode materials of lithium batteries. It may be seen that in Embodiment 2, with the solution pH value same as that in Embodiment 1, by maintaining a higher reaction temperature, and controlling the rate of adding the reaction material to fully react for 3 h and age for 1 h, the resulting precipitate may have larger crystalline grains, which facilitates the filtration and washing of the precipitate, achieving a higher removal rate of Al, Fe and Mn metals and a better impurity removal effect.

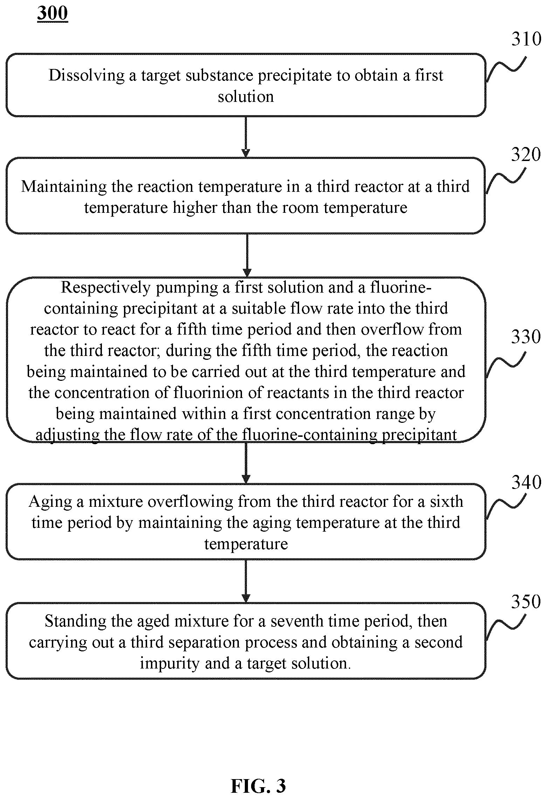

Since the pH meter is required to monitor the pH of the solution for real-time control of the reaction process in the recycling process of scrap positive electrode materials of lithium batteries, the pH meter is required to have a high sensitivity and avoid poisoning of electrodes thereof. The present disclosure has found that lithium ions in the solution in the recycling process of scrap positive electrode materials of lithium batteries may easily poison electrodes of the pH meter when the PH is larger than 7, making it difficult to monitor the true pH value of the solution, and thus it is difficult to control other parameters (e.g., the flow rate of the first alkaline solution) in the reaction process, which is not conducive to the control of the reaction conditions when preparing ternary precursors (or called the precursor precipitate) by co-precipitation. In addition, since a fluorine-containing precipitant (e.g., sodium fluoride) is used for carrying out precipitation during the subsequent process of removing calcium ions, magnesium ions or lead ions (details of which may refer to the description of FIG. 3); due to the low solubility, lithium fluoride may be removed as an impurity together with the calcium ions, magnesium ions or lead ions, which can lead to a reduced recycling rate of lithium ions in the recycling process of scrap positive electrode materials of lithium batteries. Therefore, according to the technical solution of the present disclosure, in the impurity removal process, it is required to recycle the lithium ions first, and then the subsequent impurity removal process is carried out.

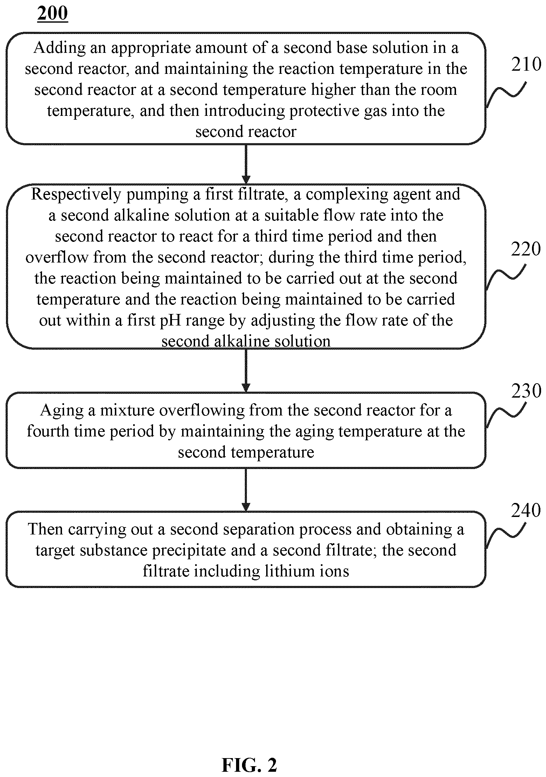

FIG. 2 is a schematic flowchart of a method 200 for recycling lithium ions in the recycling process of scrap positive electrode materials of lithium batteries according to some other embodiments of the present disclosure.

The process of recycling lithium ions in the recycling process of scrap positive electrode materials of lithium batteries may be carried out in reactors and aging reactors. As shown in FIG. 8, a first filtrate, a complexing agent and a second alkaline solution may be pumped into a reactor through a feeding pump A, a feeding pump B, and a feeding pump C (not shown in FIG. 8) respectively, and overflow into an aging reactor through a discharging pipe A on the reactor to be aged after reacting for a period of time, wherein the reactor may be a second reactor and the aging reactor may be a second aging reactor.

Step 210: adding an appropriate amount of a second base solution in the second reactor, and maintaining the reaction temperature in the second reactor at a second temperature higher than the room temperature, and then introducing protective gas into the second reactor.

The volume of the second reactor may be set according to the process production requirements or the charging rate of reaction materials. For example, the volume of the second reactor may be 50 L, 80 L or 100 L. The second base solution is the liquid which is placed in the second reactor before the reaction material is pumped in. The second base solution is used for soaking a pH meter so that electrodes of the pH meter are located below the liquid level. In some embodiments, the second base solution may be ammonium hydroxide.

The second temperature may be higher than the room temperature. In some embodiments, the second temperature may be within a range of 40 °C-70 °C. Preferably, the second temperature may be within a range of 43 °C-68 °C. Preferably, the second temperature may be within a range of 46 °C-66 °C. Preferably, the second temperature may be within a range of 48 °C-64 °C. Preferably, the second temperature may be within a range of 50 °C-62 °C. Preferably, the second temperature may be within a range of 52 °C-60 °C. Preferably, the second temperature may be within a range of 54 °C-58 °C. Preferably, the second temperature may be 40°C. Preferably, the second temperature may be 45°C. Preferably, the second temperature may be 50°C. Preferably, the second temperature may be 55°C. Preferably, the second temperature may be 60°C. Preferably, the second temperature may be 65°C. More preferably, the second temperature may be 70°C. In some embodiments, the second reactor may be heated to maintain the reaction temperature in the second reactor at the second temperature. The method for heating the second reactor may include electrical heating, steam heating, heat transfer oil circulation heating or far infrared heating, which is not limited in the present disclosure. Since the second temperature is higher than the crystallization temperature in the prior art, it is easier to obtain large-grained crystals by crystallization.

In some embodiments, the protective gas may include nitrogen or inert gas (e.g., helium, neon or argon gas).

220: respectively pumping the first filtrate, the complexing agent and the second alkaline solution at a suitable flow rate into the second reactor to react for a third time period and then overflow from the second reactor; during the third time period, the reaction being maintained to be carried out at the second temperature and the reaction being maintained to be carried out within a first pH range by adjusting the flow rate of the second alkaline solution.

The flow rate of the first filtrate, the complexing agent and the second alkaline solution may be set according to the process production requirement and may be set at a suitable value so that the first filtrate, the complexing agent and the second alkaline solution react for the third time period and then overflow from the second reactor. For example, the volume of the second reactor is 50 L. The flow rate of the first filtrate may be within a range of 40 mL/min-300 mL/min, the flow rate of the complexing agent may be set proportionally to the flow rate of the first filtrate (e.g., the flow rate of the complexing agent may be within a range of 1 mL/min-50 mL/min), and the flow rate of the second alkaline solution may be controlled by maintaining the reaction to be carried out within the first pH range or within the measurement error range. In some embodiments, the complexing agent may include ammonium hydroxide, oxalic acid, ethylenediaminetetraacetic acid (EDTA) or citric acid. The complexing agent serves to form complexes with nickel ions, cobalt ions and manganese ions in the first filtrate, resulting in a more uniform particle size of the crystalline grains of the formed precipitate and facilitating filtration for separation.

In some embodiments, the second alkaline solution is the same as the first alkaline solution. For example, the first alkaline solution is a lithium hydroxide solution and the second alkaline solution is also a lithium hydroxide solution. When pumping the first filtrate and the complexing agent into the second reactor, a feeding pipe of the first filtrate and a feeding pipe of the complexing agent may be extended into the bottom of the second reactor. In some embodiments, the feeding pipe of the first filtrate and the feeding pipe of the complexing agent may be the same one or may be two different pipes. When pumping the second alkaline solution into the second reactor, a feeding pipe of the second alkaline solution may be extended into the bottom of the second reactor. As shown in FIG. 8, the first filtrate, the complexing agent and the second alkaline solution may be pumped into the reactor (i.e., the second reactor) via the feeding pump A, the feeding pump B and the feeding pump C (not shown in FIG. 8) respectively, and the feeding pipe A, the feeding pipe B and the feeding pipe C (not shown in FIG. 8) may be inserted into the bottom of the reactor. In some embodiments, the second reactor may include a stirring assembly for stirring the first filtrate, the complexing agent and the second alkaline solution in the second reactor.

In some embodiments, the first pH range may be 10.5-11.8. Preferably, the first pH range may be 10.6-11.7. Preferably, the first pH range may be 10.7-11.6. Preferably, the first pH range may be 10.8-11.5. Preferably, the first pH range may be 10.9-11.4. Preferably, the first pH range may be 11.0-11.3. More preferably, the first pH range may be 11.1-11.2. In some embodiments, the pH of the solution maintaining within the first pH range may be that the pH of the solution is always at a certain value within the first pH range or fluctuates within the first pH range. For example, if the first pH range is 10.8-11.5, the pH of the solution may be considered maintained in the first pH range when the pH value of the solution is 10.8, 10.9, 11.0, 11.1, 11.2, 11.3, 11.4, 11.5 or fluctuates within the range of 10.8-11.5. When pumping the second alkaline solution into the second reactor, the pumping rate of the second alkaline solution may be controlled by measuring the pH value of the solution in real time with a pH meter so that the pH of the solution is maintained within the first pH range or within the measurement error range (the allowable range of the measurement error of the pH range is ±0.05, i.e., the first pH range may be 10.45-11.85). For example, if the first pH range needs to be 10.7-11.6, when the flow rate of the second alkaline solution is 80 mL/min, the pH of the solution is less than 10.7, the flow rate of the second alkaline solution needs to be increased appropriately to rise the pH of the solution to be within the range of 10.7-11.6; conversely, when the flow rate of the second alkaline solution is 200 mL/min, the pH of the solution is higher than 11.6, the flow rate of the second alkaline solution needs to be reduced appropriately to drop the pH of the solution down to be within the range of 10.7-11.6.

In some embodiments, the third time period may be within a range of 2 h-10 h. Preferably, the third time period may be within a range of 2.5 h-9 h. Preferably, the third time period may be within a range of 3 h-8 h. Preferably, the third time period may be within a range of 4.0 h-7.0 h. Preferably, the third time period may be within a range of 4.5 h-6.5 h. Preferably, the third time period may be within a range of 5.0 h-6.0 h. Preferably, the third time period may be within a range of 5.3 h-5.7 h. Preferably, the third time period may be 3 h. Preferably, the third time period may be 4 h. Preferably, the third time period may be 5 h. Preferably, the third time period may be 6 h. Preferably, the third time period may be 7 h. More preferably, the third time period may be 8 h. By setting the volume of the second reactor and the location of an overflow port (e.g., the overflow port is disposed in the upper middle of the second reactor), the reaction material may fully react in the second reactor for 3 h-8 h and then overflow from the second reactor to the second aging reactor.

By continuously pumping the first filtrate, the complexing agent and the second alkaline solution into the second reactor for continuous reaction and allowing the above mixture to stay in the second reactor for 2 h-10 h, the mixture may fully react and precipitate, so that continuous treatment of the first filtrate can be achieved.

Step 230: aging a mixture overflowing from the second reactor for a fourth time period by maintaining the aging temperature at the second temperature.

The aging process may be carried out in the second aging reactor. In some embodiments, the second aging reactor may be heated to maintain the aging temperature in the second aging reactor at the second temperature. The method for heating the second aging reactor may include electrical heating, steam heating, heat transfer oil circulation heating or far infrared heating, which is not limited in the present disclosure. More about the second temperature may refer to the description of step 210 and not be repeated here. In some embodiments, the fourth time period may be within a range of 0.5 h-2 h. Preferably, the fourth time period may be within a range of 0.8 h-1.8 h. Preferably, the fourth time period may be within a range of 1.0 h-1.6 h. Preferably, the fourth time period may be within a range of 1.2 h-1.4 h. Preferably, the fourth time period may be 0.5 h. Preferably, the fourth time period may be 1 h. Preferably, the fourth time period may be 1.5 h. More preferably, the fourth time period may be 2 h.

By aging the fully reacted mixture for the fourth time period, the crystalline grains of the crystals precipitated in the reacted mixture may grow and increase and the particle size distribution thereof is made more uniform.

Step 240: then carrying out a second separation process and obtaining a target substance precipitate and a second filtrate; the second filtrate including lithium ions.

In some embodiments, the aged mixture may be cooled and the second separation process may be carried out on the cooled mixture to obtain the target substance precipitate and the second filtrate. Specifically, the second separation process may be a solid-liquid separation process. For example, the second separation method may include filtration, gravity settling, centrifugal settling, pressure filtration, etc. In some embodiments, the target substance precipitate may be a precipitate including one or more of nickel ions, cobalt ions, and manganese ions. In some embodiments, the second filtrate may include at least lithium ions.

The method described above allows the target substance (one or more of nickel ions, cobalt ions, and manganese ions) to be precipitated so that the lithium ions are separated in the form of a solution to achieve the purpose of recycling lithium.

A method for recycling lithium ions in the recycling process of scrap positive electrode materials of lithium batteries is described in detail below by means of Embodiment 3 and Embodiment 4. It is to be noted that the reaction conditions, reaction materials and the usage amount of the reaction materials in Embodiment 3 and Embodiment 4 are only intended to illustrate the method for recycling lithium ions in the recycling process of scrap positive electrode materials of lithium batteries, and do not limit the scope of protection of the present disclosure. Embodiment 3 is an embodiment using the method for recycling lithium in FIG. 2. Embodiment 4 is an embodiment of a method for recycling lithium by batch processing a first filtrate, and Embodiment 4 is a control group for Embodiment 3.

### Embodiment 3

Step 1: 10 L of deionized water and 300 mL of ammonium hydroxide of 23.5% were added to a second reactor of 50 L as a second base solution, the reaction temperature was maintained at 50 °C and nitrogen was introduced as protective gas.

Step 2: the first filtrate obtained in Embodiment 2 was pumped into the second reactor at a flow rate of 60 mL/min, and ammonium hydroxide of 12% was pumped into the second reactor at a flow rate of 5 mL/min. The flow rate for pumping a lithium hydroxide solution of 4 mol/L was controlled in real time with a pH meter, and the flow rate of the lithium hydroxide solution was controlled so that the pH value of a mixture was within a range of 10.7-11.2. After 5 h of full reaction, the mixture overflowed from an overflow port of the second reactor to flow into a second aging reactor.

Step 3: the second aging reactor was heated to keep the aging temperature constant at 50 °C and the mixture was aged in the second aging reactor for 1 h.

Step 4: the aged mixture was filtered with a centrifugal machine and the filter cake was washed. The amount of water used for washing 100 g of precipitate was 1.12 L.

Step 5: the filter cake after being filtered was collected and ICP, XRD and SEM testing were carried out on a filter residue. After the ICP testing, a lithium content of 0.02% was obtained and it was considered that the filter cake was washed clean.

### Embodiment 4

Step 1: at the room temperature, 30 L of a first filtrate was added in a second reactor of 50 L, the first filtrate coming from Embodiment 2.

Step 2: the addition amount of a lithium hydroxide solution of 4 mol/L was controlled to pumped in with a pH meter until the pH value was 10.5. The mixture was allowed to stably react for 1 h.

Step 3: a reacted mixture was filtered with a centrifugal machine and filter cake was washed. The amount of water used for washing 100 g of precipitate was 2.32 L.

Step 4: the filter cake after being filtered was collected and the ICP and XRD testing were carried out on a filter residue. After the ICP testing, a lithium content of 0.03% was obtained and it was considered that the filter cake was washed clean.

Based on the amount of water used to wash the filter cake in Embodiment 3 and Embodiment 4, it may be seen that the amount of water used to wash 100 g of precipitate is smaller in Embodiment 3, indicating that the crystalline grains of the precipitate in Embodiment 3 are larger than those in Embodiment 4. Since in Embodiment 3, the crystallization of the precipitate of nickel-cobalt-manganese is carried out at a constant pH range (e.g., 10.7-11.2), co-precipitation of nickel-cobalt-manganese hydroxide can be achieved. Because nickel hydroxide starts to precipitate at a pH value of 7.2, cobalt hydroxide starts to precipitate at a pH value of 7.15 and manganese hydroxide starts to precipitate at a pH value of 8.1, the pH value for complete precipitation varies, the nickel-cobalt-manganese precipitate in Embodiment 4 precipitates and crystallizes separately at different pH ranges (continuously adding a lithium hydroxide solution until a pH value of 10.5 is reached), and co-precipitate of nickel-cobalt-manganese hydroxide cannot be formed. Therefore, by controlling the pH in the range of 10.7-11.2 in Embodiment 3, the co-precipitate of the nickel-cobalt-manganese hydroxide is generated easily and the crystalline grains of the precipitate are larger than those in Embodiment 4.

Based on the lithium content test results of the filter residue in Embodiment 3 and Embodiment 4, it may be seen that the lithium content of the filter cake in Embodiment 3 is smaller, even though the lithium content of the filter cake in Embodiment 4 is small enough, it is considered that cleaning is thorough, but the amount of water used to wash 100 g of precipitate in Embodiment 4 is 2.32 L and the amount of water used to wash 100 g of precipitate in Embodiment 3 is 1.12 L. The amount of water used in Embodiment 4 is twice of the amount of water used in Embodiment 3. In addition, the washing time in Embodiment 4 is longer.

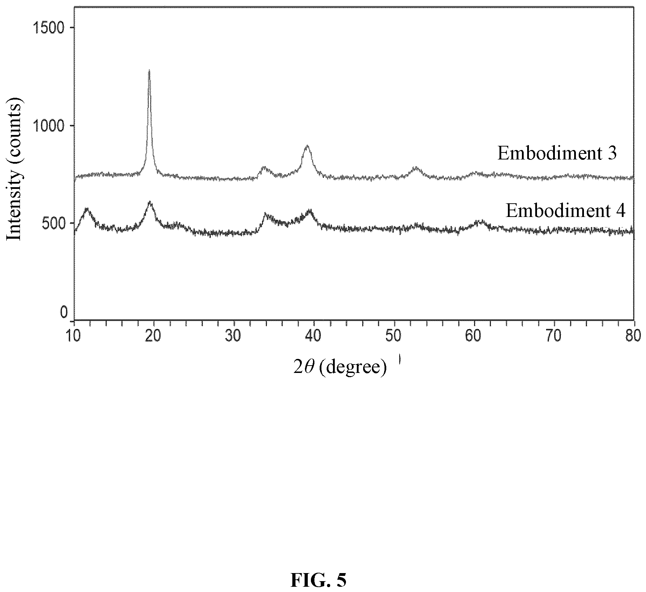

FIG. 5 is an XRD pattern of the filter residue according to Embodiments 3 and 4 of the present disclosure. As can be seen from FIG. 5, the filter residue sample of Embodiment 3 shows clear diffraction peaks at *2θ* of 20°, 35° and 40°, which are more intense than the diffraction peaks at the corresponding positions in Embodiment 4. This indicates that the nickel-cobalt-manganese hydroxide of Embodiment 3 has better crystallinity after dehydrogenation at 500 °C than Embodiment 4. It shows that after recycling lithium ions with the method of Embodiment 3, the obtained nickel-cobalt-manganese precipitate has larger crystalline grains, achieving co-precipitation of nickel-cobalt-manganese and a relatively uniform structure of the crystalline grains of the precipitate, which facilitates better separating and recycling lithium ions during filtration.

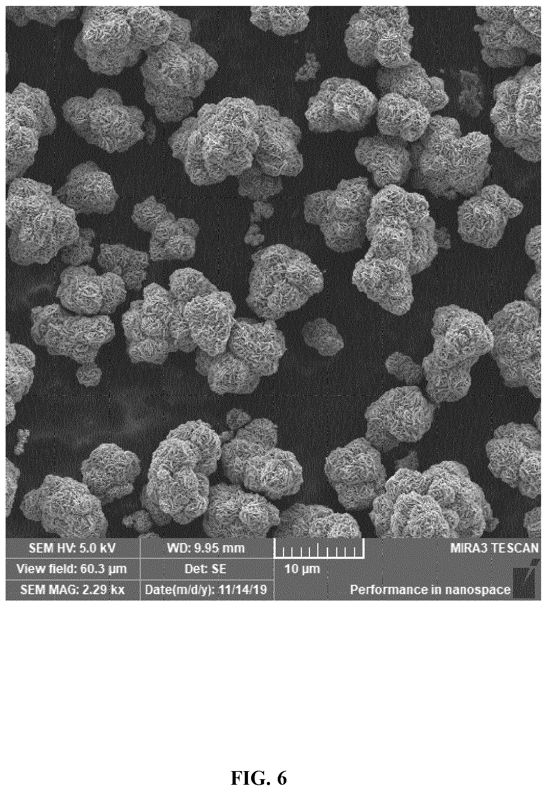

FIG. 6 is an SEM image of the filter residue according to Embodiment 3 of the present disclosure. The precipitate sample of Embodiment 4 is obviously agglomerated after drying, and it is determined that crystalline grains are all tiny crystalline grains, and form colloidal substances. In contrast, the precipitate of Embodiment 3 is naturally loosened into a sandy form after being dried, with a better secondary crystalline grain structure as can be seen from the SEM image.

Based on the comparison results of Embodiment 3 and Embodiment 4: in Embodiment 3, by adding ammonium hydroxide as a complexing agent, maintaining the reaction temperature at 50°C, maintaining the pH of a solution within a range of 10.7-11.2 and fully reacting for 5 h and aging for 1 h, the lithium ions are recycled; in Embodiment 4, the reaction material is added at one time and reacts for 1 h at the room temperature and at a solution pH of 10.5 to recycle lithium ions. It may be seen that in Embodiment 3, with the solution pH value same as that in Embodiment 4, by maintaining a higher reaction temperature constant and adding ammonium hydroxide as a complexing agent to form complexes with target ions, achieving a dissolution and precipitation equilibrium, controlling the feeding rate and prolonging the feeding time and the reaction time and the aging time together, the resulting precipitate may have larger crystalline grains, with relatively uniform crystalline grain structure, which facilitates the filtration and washing of the precipitate, so that the recycling rate of lithium is higher.

FIG. 3 is a schematic flowchart of a method 300 for impurity removal in the recycling process of scrap positive electrode materials of lithium batteries according to some embodiments of the present disclosure.

The process of impurity removal in the recycling process of scrap positive electrode materials of lithium batteries may be carried out in reactors and aging reactors. As shown in FIG. 8, a first solution and a fluorine-containing precipitant may be pumped into a reactor through a feeding pump A and a feeding pump B respectively, and overflow into an aging reactor through a discharging pipe A on the reactor to be aged after reacting for a period of time, wherein the reactor may be a third reactor and the aging reactor may be a third aging reactor.

Step 310: dissolving a target substance precipitate to obtain a first solution.

In some embodiments, a leaching agent may be added into the target substance precipitate to carry out dissolution. Specifically, a leaching agent may be added to the target substance precipitate for dissolution until the pH is within a third range to obtain a target substance-containing solution. The leaching agent includes at least a reducing agent, a first acid and water, and more about the leaching agent may refer to the foregoing description and not be repeated here. In some embodiments, the third range may be 0-4. Preferably, the third pH range may be 0.5-3.5. Preferably, the third pH range may be 1.0-3.5. Preferably, the third pH range may be 1.5-3.0. Preferably, the third pH range may be 2.0-2.5. In some embodiments, the target substance-containing solution may be a solution including one or more of nickel ions, cobalt ions, and manganese ions.

In some embodiments, a fourth alkaline solution may be added to the target substance-containing solution to adjust the pH of the solution. Specifically, an appropriate amount of a fourth alkaline solution may be added to the target substance-containing solution until the pH is within a fourth range to obtain a first solution. In some embodiments, the fourth alkaline solution may be a sodium hydroxide solution. The addition amount of the fourth alkaline solution is determined depending on the pH of the solution, and when the fourth alkaline solution is added, it may be controlled to stop adding the fourth alkaline solution when the pH of the solution is within the fourth range. In some embodiments, the fourth range may be 4.5-6.5. Preferably, the fourth range may be 4.8-6.3. Preferably, the fourth range may be 5.0-6.0. Preferably, the fourth range may be 5.2-5.8. Preferably, the fourth range may be 5.4-5.6. The first solution may be a solution including one or more of nickel ions, cobalt ions, and manganese ions.

Step 320: maintaining the reaction temperature in the third reactor at a third temperature higher than the room temperature.

The volume of the third reactor may be set according to the process production requirements or the charging rate of reaction materials. For example, the volume of the third reactor may be 50 L, 80 L or 100 L.

The third temperature may be higher than the room temperature. In some embodiments, the third temperature is within a range of 50 °C-90 °C. Preferably, the third temperature may be within a range of 52 °C-88 °C. Preferably, the third temperature may be within a range of 55 °C-86 °C. Preferably, the third temperature may be within a range of 58 °C-83 °C. Preferably, the third temperature may be within a range of 60 °C-80 °C. Preferably, the third temperature may be within a range of 62 °C-78 °C. Preferably, the third temperature may be within a range of 65 °C-76 °C. Preferably, the third temperature may be within a range of 67 °C-73 °C. Preferably, the third temperature may be within a range of 69 °C-71 °C. Preferably, the third temperature may be 50°C. Preferably, the third temperature may be 55°C. Preferably, the third temperature may be 60°C. Preferably, the third temperature may be 65°C. Preferably, the third temperature may be 70°C. Preferably, the third temperature may be 75°C. Preferably, the third temperature may be 80°C. Preferably, the third temperature may be 85°C. More preferably, the third temperature may be 90°C. In some embodiments, the third reactor may be heated to maintain the reaction temperature in the third reactor at the third temperature. The method for heating the third reactor may include electrical heating, steam heating, heat transfer oil circulation heating or far infrared heating, which is not limited in the present disclosure. Since the third temperature is higher than the crystallization temperature in the prior art, it is easier to obtain large-grained crystals by crystallization.

Step 330: respectively pumping the first solution and the fluorine-containing precipitant at a suitable flow rate into the third reactor to react for a fifth time period and then overflow from the third reactor; during the fifth time period, the reaction being maintained to be carried out at the third temperature and the concentration of fluorinion of reactants in the third reactor being maintained within a first concentration range by adjusting the flow rate of the fluorine-containing precipitant.

Before the first solution is pumped in, an appropriate amount of a fluorine-containing precipitant may be added into the third reactor as a base solution. In some embodiments, the concentration of fluorinion in the reactor in reaction may be within a range of 0.01 mol/L-0.10 mol/L. Preferably, the concentration of fluorinion may be within a range of 0.012 mol/L-0.09 mol/L. Preferably, the concentration of fluorinion may be within a range of 0.013 mol/L-0.06 mol/L. Preferably, the concentration of fluorinion may be within a range of 0.014 mol/L-0.04 mol/L. Preferably, the concentration of fluorinion may be within a range of 0.015 mol/L-0.02 mol/L.

The flow rate of the first solution and the fluorine-containing precipitant may be set according to the process production requirement and may be set at a suitable value so that the first solution and the fluorine-containing precipitant react for the fifth time period and then overflow from the third reactor. For example, in some embodiments, the volume of the third reactor is 50 L and the flow rate of the first solution may be within a range of 40 mL/min-300 mL/min, the flow rate of the fluorine-containing precipitant may be controlled by maintaining the concentration of fluorinion of the reactants in the third reactor within the first concentration range or the measurement error range (e.g., the allowable range of the measurement error of the concentration range of fluorinion is ±0.0005 mol/L, i.e., the concentration range of fluorinion may be 0.0095 mol/L-0.1005 mol/L), for example, the flow rate of 5 mL/min -100 mL/min of the fluorine-containing precipitant. When pumping the first solution into the third reactor, a feeding pipe of the first filtrate may be extended into the bottom of the third reactor. When pumping the fluorine-containing precipitant into the third reactor, a feeding pipe of the fluorine-containing precipitant may be extended into the bottom of the third reactor. As shown in FIG. 8, the first solution and the fluorine-containing precipitant may be pumped into the reactor (i.e., the third reactor) via a feeding pump A and a feeding pump B, respectively, and a feeding pipe A and a feeding pipe B may be inserted into the bottom of the reactor. In some embodiments, the third reactor may include a stirring assembly for stirring the first solution and the fluorine-containing precipitant in the third reactor.

In some embodiments, the first concentration range may be the concentration of fluorinion of 0.005 mol/L-0.1 mol/L. Preferably, the first concentration range may be the concentration of fluorinion of 0.010 mol/L-0.099 mol/L. Preferably, the first concentration range may be the concentration of fluorinion of 0.020 mol/L-0.095 mol/L. Preferably, the first concentration range may be the concentration of fluorinion of 0.030 mol/L-0.090 mol/L. Preferably, the first concentration range may be the concentration of fluorinion of 0.040 mol/L-0.080 mol/L. Preferably, the first concentration range may be the concentration of fluorinion of 0.050 mol/L-0.070 mol/L. More preferably, the first concentration range may be the concentration of fluorinion of 0.055 mol/L-0.060 mol/L. In some embodiments, the concentration of fluorinion of the solution maintaining within the first concentration range may be that the concentration of fluorinion of the solution is always at a certain value within the first concentration range or fluctuates within the first concentration range. For example, if the first concentration range is 0.01 mol/L-0.02 mol/L, the concentration of fluorinion of the solution may be considered maintained in the first concentration range when the concentration of fluorinion of the solution is 0.01 mol/L, 0.011 mol/L, 0.012mol/L, 0.013 mol/L, 0.014 mol/L, 0.015 mol/L, 0.016mol/L, 0.017 mol/L, 0.018 mol/L, 0.019mol/L or fluctuates within the range of 0.01 mol/L-0.02 mol/L. When pumping the fluorine-containing precipitant into the third reactor, the pumping rate of the fluorine-containing precipitant may be controlled by measuring the concentration of fluorinion of the solution in real time with a pH meter so that the concentration of fluorinion of the solution is maintained within the first concentration range or within the measurement error range (the allowable range of the measurement error of the concentration range of fluorinion is ± 0.0005 mol/L, i.e., the concentration range of fluorinion may be 0.0095 mol/L-0.1005 mol/L). The pumping rate of the fluorine-containing precipitant is a fifth flow rate. For example, if the first concentration range is 0.010 mol/L-0.015 mol/L, when the flow rate of the fluorine-containing precipitant is 10 mL/min, the concentration of fluorinion of the solution is less than 0.010 mol/L, the flow rate of the fluorine-containing precipitant needs to be increased appropriately to rise the concentration of fluorinion of the solution to be within the range of 0.010 mol/L-0.015 mol/L; conversely, when the flow rate of the fluorine-containing precipitant is 40 mL/min, the concentration of fluorinion of the solution is higher than 0.015 mol/L, the flow rate of the fluorine-containing precipitant needs to be reduced appropriately to drop the concentration of fluorinion of the solution down to be within the range of 0.010 mol/L-0.015 mol/L.

In some embodiments, the fifth time period may be within a range of 2 h-10 h. Preferably, the fifth time period may be within a range of 2.5 h-8.0 h. Preferably, the fifth time period may be within a range of 3.0 h-7.0 h. Preferably, the fifth time period may be within a range of 4.5 h-6.5 h. Preferably, the fifth time period may be within a range of 5.0 h-6.0 h. Preferably, the fifth time period may be within a range of 5.3 h-5.7 h. Preferably, the fifth time period may be 3 h. Preferably, the fifth time period may be 4 h. Preferably, the fifth time period may be 5 h. Preferably, the fifth time period may be 6 h. Preferably, the fifth time period may be 7 h. More preferably, the fifth time period may be 8 h. By setting the volume of the third reactor and the location of an overflow port (e.g., the overflow port is disposed in the upper middle of the third reactor), the reaction material may fully react in the third reactor for 3 h-8 h and then overflow from the third reactor to the third aging reactor.

By continuously pumping the first solution and the fluorine-containing precipitant into the third reactor for continuous reaction and allowing the above mixture to stay in the third reactor for 2 h-10 h, the mixture may fully react and precipitate, so that continuous treatment of the first solution can be achieved.

Step 340: aging a mixture overflowing from the third reactor for a sixth time period by maintaining the aging temperature at the third temperature.

The aging process may be carried out in the third aging reactor. In some embodiments, the third aging reactor may be heated to maintain the aging temperature in the third aging reactor at the third temperature. The method for heating the third aging reactor may include electrical heating, steam heating, heat transfer oil circulation heating or far infrared heating, which is not limited in the present application. More about the third temperature may refer to the description of step 320 and not be repeated here.

In some embodiments, the sixth time period may be within a range of 0.5 h-2 h. Preferably, the sixth time period may be within a range of 0.8 h-1.8 h. Preferably, the sixth time period may be within a range of 1.0 h-1.6 h. Preferably, the sixth time period may be within a range of 1.2 h-1.4 h. Preferably, the sixth time period may be 0.5 h. Preferably, the sixth time period may be 1 h. Preferably, the sixth time period may be 1.5 h. More preferably, the sixth time period may be 2 h.

By aging the fully reacted mixture for the sixth time period, the crystalline grains of the crystals precipitated in the reacted mixture may grow and increase and the particle size distribution thereof may be made more uniform.

Step 350: standing the aged mixture for a seventh time period, then carrying out a third separation process and obtaining a second impurity and a target solution.

The standing process may be carried out in a second buffer tank, and the aged mixture may be pumped into the second buffer tank for standing. In some embodiments, the seventh time period may be within a range of 0.5 h-2 h. Preferably, the seventh time period may be within a range of 0.8 h-1.8 h. Preferably, the seventh time period may be within a range of 1.0 h-1.6 h. Preferably, the seventh time period may be within a range of 1.2 h-1.4 h. Preferably, the seventh time period may be 0.5 h. Preferably, the seventh time period may be 1.0 h. Preferably, the seventh time period may be 1.5 h. More preferably, the seventh time period may be 2 h.

In some embodiments, the third separation process may be carried out on the mixture after standing to obtain the second impurity and the target solution. Specifically, the third separation process may be a solid-liquid separation process. For example, the third separation method may include filtration, gravity settling, centrifugal settling, pressure filtration, etc. In some embodiments, the second impurity may include one or more of calcium fluoride, magnesium fluoride and lead fluoride. In some embodiments, the target solution may be a solution including one or more of nickel ions, cobalt ions, and manganese ions. In some embodiments, the aged mixture may not be subjected to standing and the third separation process may be carried out directly on the aged mixture.

In some embodiments, the target solution may also be further treated so that a precursor precipitate may be obtained. Specifically, a third alkaline solution may be added to the target solution to obtain the precursor precipitate. In some embodiments, the third alkaline solution may be the same as the fourth alkaline solution. For example, the third alkaline solution may be a sodium hydroxide solution. In some embodiments, the precursor precipitate and lithium hydroxide crystals or lithium carbonate crystals may also be further sintered to obtain positive electrode materials of lithium batteries.

The above method controls the flow rate, reaction temperature, reaction time and aging time of the first solution and the fluorine-containing precipitant pumped into the third reactor to make crystalline grains of the crystals grow sufficiently to become large crystalline grains, which facilitates carrying out the third separation process, reduces the amount of water used for washing and shortens the washing time in the third separation process, and also reduces the waste of nickel-cobalt-manganese ions in the washing process, thereby improving the recycling rate of nickel-cobalt-manganese.

A method for removing calcium ions, manganese ions and lead ions in the recycling process of scrap positive electrode materials of lithium batteries is described in detail below by means of Embodiment 5 and Embodiment 6. It is to be noted that the reaction conditions, reaction materials and the usage amount of the reaction materials in Embodiments 5 and 6 are only intended to illustrate the method for removing calcium ions, manganese ions and lead ions in the recycling process of scrap positive electrode materials of lithium batteries, and do not limit the scope of protection of the present disclosure. Embodiment 5 is an embodiment using the method for impurity removal in FIG. 3. Embodiment 6 is an embodiment of a method for impurity removal by batch processing impurities in a target substance precipitate, and Embodiment 6 is a control group for Embodiment 5.

### Embodiment 5

Step 1: a target substance precipitate containing nickel, cobalt and manganese ions was dissolved with sulphuric acid and hydrogen peroxide and the pH value of a solution was controlled to be 3.2 for reaction to obtain a target substance-containing solution; a NaOH solution was added to the target substance-containing solution to make the pH value of a mixture be 5.2 to obtain a first solution.

Step 2: the first solution with a pH value of 5.2 was added to a third reactor of a volume of 50 L with a peristaltic pump at a controlled flow rate of 100 mL/min and a controlled reaction temperature of 90 °C in the third reactor. A NaF solution of 0.96 mol/L was simultaneously added to the third reactor at a flow rate of 20 mL/min. Samples were taken every 30 min to test the content of fluorinion of a reaction solution, and the flow rate of the NaF solution was adjusted according to the test value to control the content of fluorinion within a range of 0.01 mol/L-0.015 mol/L. After 5 h of full reaction, a mixture overflowed from an overflow port of the third reactor to enter a third aging reactor. In the process, a total of 30 L of the first solution was pumped in.

Step 3: the third aging reactor was heated to keep the aging temperature constant at 90 °C and the mixture was aged in the third aging reactor for 1 h.

Step 4: Pumping the mixture from the third aging reactor into a third buffer tank to stand for 1 h, and observing a supernatant which is clear and free of floating matter.

Step 5: the aged mixture was filtered with a filter press and a wet filter residue was collected to carry out cleaning in a laboratory.

Step 6: a filtrate was collected to obtain a filtrate of 41.5 L.

Step 7: the ICP testing was carried out on the first solution, the filtrate and the filter residue and the SEM testing was carried out on the filter residue.

### Embodiment 6

Step 1: a target substance precipitate containing nickel, cobalt and manganese ions were dissolved with concentrated sulphuric acid and hydrogen peroxide and controlling the pH value of a solution to be 3.2 for reaction to obtain a target substance-containing solution; a NaOH solution was added to the target substance-containing solution to make the pH value of a mixture be 5.2 to obtain a first solution.

Step 2: 40 L of the first solution with a pH value of 5.2 was added at one time to a third reactor of a volume of 50 L; and the reaction temperature in the third reactor was maintained at 90°C.

Step 3: 81 g of NaF solid was added and stirred for 1 h, and cooled naturally to the room temperature after stopping heating.

Step 4: after standing for 24 h, a supernatant was observed with white floating matter on the surface that cannot be precipitated.

Step 5: the aged mixture was filtered with a filter press and a wet filter residue was collected to carry out cleaning in a laboratory.

Step 6: a filtrate was collected to obtain a filtrate of 39.5 L.

Step 7: the ICP testing was carried out on the first solution, the filtrate and the filter residue and the SEM testing was carried out on the filter residue.

Based on the ICP test results of Embodiment 5 and Embodiment 6, the data in the following table may be obtained.

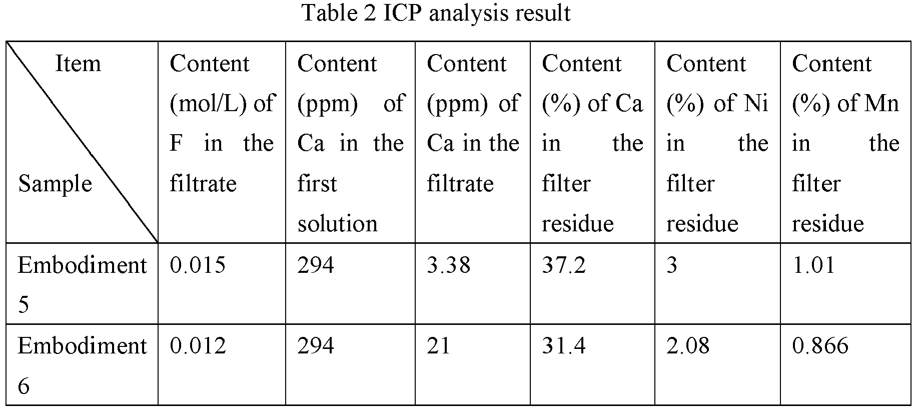

The removal rates of calcium ions in Embodiment 5 and Embodiment 6 may be further calculated based on Table 2.

The removal rate of calcium ions in Embodiment 5: Ca removal rate=(Ca content in the first solution × the first solution volume - Ca content in the filtrate × filtrate volume)/(Ca content in the first solution × the first solution volume)=(294 × 30 L - 3.38 × 41.5 L)/(294 × 30 L) × 100%=98.4%.

The removal rate of calcium ions in Embodiment 6: Ca removal rate=(Ca content in a first solution × first solution volume - Ca content in the filtrate × filtrate volume)/(Ca content in the first solution × first solution volume)=(294 × 40 L - 21 ×39.5 L)/(294 × 40 L)=92.9%.

From the calculation results of the removal rate of calcium ions in Embodiments 5 and 6, it may be seen that the removal rate of calcium ions in Embodiment 5 is higher than that in Embodiment 6, indicating that Embodiment 5 is more effective in removing calcium ions in the first solution.

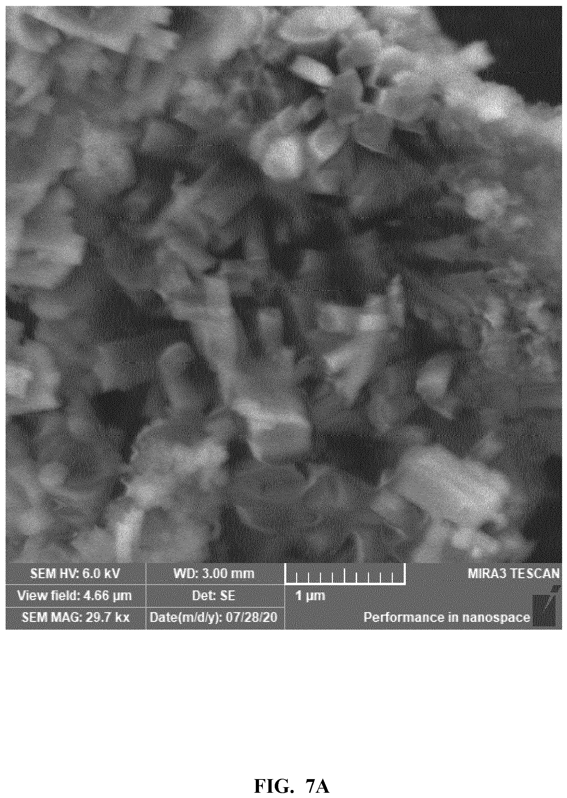

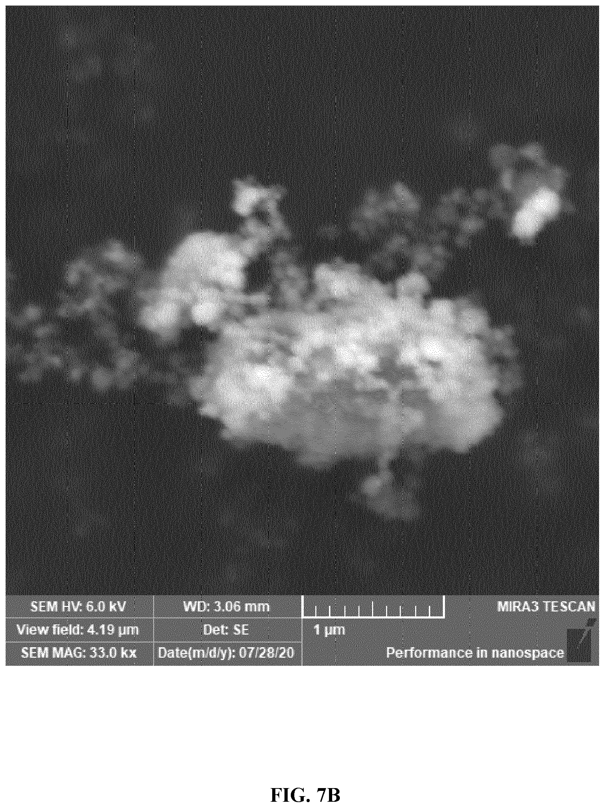

FIG. 7A is an SEM image of the filter residue according to Embodiment 5 of the present disclosure, and FIG. 7B is an SEM image of the filter residue according to Embodiment 6 of the present disclosure. As can be seen in FIG. 7A and FIG. 7B, the filter residue in Embodiment 5 has a clear cubic crystal structure, whereas the filter residue in Embodiment 6 has tiny crystalline grains and the crystalline grain structure cannot be distinguished. It shows that the precipitate obtained after the method of Embodiment 5 is used for carrying out impurity removal on the first filtrate has larger crystalline grains than the precipitate obtained after the method of Embodiment 6 is used for carrying out impurity removal on the first filtrate.

Based on the comparison results of Embodiment 5 and Embodiment 6: in Embodiment 5, by maintaining the reaction temperature at 90 °C, controlling the content of fluorinion within a range of 0.01 mol/L-0.015 mol/L and fully reacting for 5 h, aging for 1 h and standing for 1 h, the first solution is subjected to impurity removal; in Embodiment 6, the reaction material is added at one time at 90°C, reacts for 1 h and stands for 24 h so as to carry out impurity removal on the first solution. It can be learned that in Embodiment 5, with the reaction temperature same as that in Embodiment 6, by controlling the charging rate of adding the first solution and the content of fluorinion, a long reaction time and a long aging time, the resulting precipitate may have larger crystalline grains, which facilitates carrying out filtration and washing on the precipitate, achieving a higher removal rate of calcium ions and a better impurity removal effect.

It is to be understood that the method for impurity removal and the method for recycling lithium in FIGs. 1-3 above may be implemented separately or simultaneously, in the actual impurity removal process, which may be determined according to the type of impurities. For example, if impurities contained in scrap positive electrode materials of lithium batteries are only one or more of iron ions, aluminum ions and copper ions, only the method for impurity removal in FIG. 1 is carried out, then the impurities in scrap positive electrode materials of lithium batteries may be removed. For another example, if impurities contained in scrap positive electrode materials of lithium batteries include one or more of iron ions, aluminum ions, and copper ions, and also include one or more of calcium ions, magnesium ions, and lead ions, the method for impurity removal and the method for recycling lithium in FIGs. 1-3 may be implemented to remove the impurities in scrap positive electrode materials of lithium batteries. For another example, if impurities contained in scrap positive electrode materials of lithium batteries are only one or more of calcium ions, magnesium ions, and lead ions, the method for impurity removal in FIG. 2 and FIG. 3 may be implemented to remove the impurities in scrap positive electrode materials of lithium batteries.

The embodiments of the present disclosure may have the beneficial effects, including, but not limited to: (1) by carrying out a precipitation reaction at a reaction temperature higher than the room temperature and a constant pH, the precipitate with a large particle size, high crystallinity and low water content can be obtained, which makes the filtration and washing process of the precipitate more efficient and convenient, reduces the amount of water used in the washing process and improves the recycling rate of nickel-cobalt-manganese in the recycling process of the scrap positive electrode materials of lithium batteries; (2) by removing the lithium ions before preparing the precursor precipitate of positive electrode materials of lithium batteries, the purpose of recycling lithium can be achieved, while avoiding affecting the control of the reaction parameters in the subsequent impurity removal process, so that the recycling rate of nickel-cobalt-manganese is improved. It is to be noted that, the beneficial effects that may be produced vary from one embodiment to another, and in different embodiments, the beneficial effects that may be produced may be any one or a combination of the above, or any other beneficial effect that may be obtained.

It is to be noted that the above embodiments are only intended to illustrate the technical solution of the present disclosure and not to limit the technical solution of the present disclosure, and it is to be understood by those of ordinary skill in the art that those modifications or equivalent substitutions to the technical solution of the present disclosure which do not depart from the purpose and scope of the present technical solution shall fall within the scope of the claims of the present disclosure.

## Claims

1. A method for impurity removal and treatment in a recycling process of scrap positive electrode materials of lithium batteries, comprising:
controlling a flow rate of a leachate of the scrap positive electrode materials of lithium batteries and a first alkaline solution at a first temperature higher than a room temperature and a constant first pH value to remove, by precipitation, iron ions, aluminum ions and at least part of copper ions to obtain a first filtrate;
controlling a flow rate of the first filtrate, a complexing agent and a second alkaline solution at a second temperature higher than the room temperature and within a constant first pH range to remove lithium ions and obtain a target substance precipitate by separating a second filtrate containing the lithium ions from the first filtrate;
dissolving the target substance precipitate to obtain a first solution; and
controlling a flow rate of the first solution and a fluorine-containing precipitant at a third temperature high than the room temperature and a constant concentration of fluorinion to remove, by precipitation, calcium ions, magnesium ions and at least part of lead ions to obtain a target solution;
wherein the method for impurity removal and treatment is carried out in an overflow reactor capable of being operated continuously.

2. The method according to claim 1, wherein the controlling a flow rate of a leachate of the scrap positive electrode materials of lithium batteries and a first alkaline solution at a first temperature higher than the room temperature and a constant first pH value to remove, by precipitation, iron ions, aluminum ions and at least part of copper ions to obtain a first filtrate, comprises:
respectively pumping the leachate of the scrap positive electrode materials of lithium batteries and the first alkaline solution at a flow rate into a first reactor to react for a first time period and then overflow from the first reactor, then carrying out a first separation process and obtaining a precipitate containing the iron ions, aluminum ions and at least part of copper ions and the first filtrate; wherein during the first time period, the reaction is maintained to be carried out at the first temperature and the reaction is maintained to be carried out at the first pH value by adjusting the flow rate of the first alkaline solution.

3. The method according to claim 2, wherein before carrying out the first separation process, the method further comprises:
aging a mixture overflowing from the first reactor for a second time period by maintaining an aging temperature at the first temperature.

4. The method according to claim 1, wherein the controlling a flow rate of the first filtrate, a complexing agent and a second alkaline solution at a second temperature higher than the room temperature and within a constant first pH range to remove lithium ions and obtain a target substance precipitate by separating a second filtrate containing the lithium ions from the first filtrate, comprises:
respectively pumping the first filtrate, the complexing agent and the second alkaline solution at a flow rate into a second reactor to react for a third time period and then overflow from the second reactor, then carrying out a second separation process and obtaining the target substance precipitate and the second filtrate containing the lithium ions; wherein during the third time period, the reaction is maintained to be carried out at the second temperature and the reaction is maintained to be carried out within the first pH range by adjusting the flow rate of the second alkaline solution.

5. The method according to claim 4, wherein before carrying out the second separation process, the method further comprises:
aging a mixture overflowing from the second reactor for a fourth time period by maintaining the aging temperature at the second temperature.

6. The method according to claim 1, wherein the dissolving the target substance precipitate to obtain a first solution, comprises:
adding a leaching agent to the target substance precipitate for dissolution until the pH is within a third range to obtain a target substance-containing solution; wherein the leaching agent includes at least a reducing agent, a first acid and water; and
adding an appropriate amount of a fourth alkaline solution to the target substance-containing solution until the pH is within a fourth range to obtain the first solution.

7. The method according to claim 1, wherein the controlling a flow rate of the first solution and a fluorine-containing precipitant at a third temperature high than the room temperature and a constant concentration of fluorinion to remove, by precipitation, calcium ions, magnesium ions and at least part of lead ions to obtain a target solution, comprises:
respectively pumping the first solution and the fluorine-containing precipitant at a flow rate into a third reactor to react for a fifth time period and then overflow from the third reactor, then carrying out a third separation process and obtaining the precipitate containing calcium ions, magnesium ions and at least part of lead ions and the target solution; wherein during the fifth time period, the reaction is maintained to be carried out at the third temperature and the concentration of fluorinion of reactants in the third reactor is maintained within a first concentration range by adjusting the flow rate of the fluorine-containing precipitant.

8. The method according to claim 7, wherein before carrying out the third separation process, the method further comprises:
aging a mixture overflowing from the third reactor for a sixth time period by maintaining the aging temperature at the third temperature; and
standing the aged mixture for a seventh time period.

9. The method according to any one of claims 1-8, wherein before carrying out precipitation treatment on the leachate of the scrap positive electrode materials of lithium batteries, the method further comprises:
adding a leaching agent to the scrap positive electrode materials of lithium batteries for dissolution until the pH is within a second range, then carrying out a fourth separation process, and obtaining a third impurity and the leachate of the scrap positive electrode materials of lithium batteries; wherein the leaching agent includes at least a reducing agent, a first acid and water.

10. The method according to any one of claims 1-8, wherein the method further comprises:
adding a third alkaline solution to the target solution to obtain a precursor precipitate.

11. The method according to any one of claims 1-8, wherein the scrap positive electrode materials of lithium batteries comprise one or more of a lithium-nickel-cobalt-manganese oxide battery material, a lithium-cobalt oxide battery material, a lithium-cobalt-manganese oxide battery material, a lithium-cobalt alumina battery material, and a lithium-manganese oxide battery material.

12. The method according to any one of claims 1-8, wherein the first pH value is within a range of 5.5-6.7.

13. The method according to any one of claims 1-8, wherein the first temperature is within a range of 50 °C-90 °C.

14. The method according to any one of claims 1-8, wherein the first alkaline solution comprises lithium hydroxide.

15. The method according to any one of claims 1-8, wherein the second temperature is within a range of 40 °C-70 °C.

16. The method according to any one of claims 1-8, wherein the complexing agent comprises ammonium hydroxide.

17. The method according to any one of claims 1-8, wherein the second alkaline solution comprises lithium hydroxide.

18. The method according to any one of claims 1-8, wherein the first pH range is 10.5-11.8.

19. The method according to claim 6, wherein the third range is 0-4.

20. The method according to claim 6, wherein the fourth range is 4.5-6.5.

21. The method according to any one of claims 1-8, wherein the third temperature is within a range of 50 °C-90 °C.

22. The method according to any one of claims 1-8, wherein the fluorine-containing precipitant comprises a sodium fluoride solution.

23. The method according to claim 7 or 8, wherein the first concentration range is 0.005 mol/L-0.1 mol/L.
